(19) **Europäisches Patentamt / European Patent Office / Office européen des brevets**

(11) **EP 4 038 463 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **20785478.7**

(22) Anmeldetag: **29.09.2020**

(51) Internationale Patentklassifikation (IPC):
**G05D 1/00** (2024.01)

(52) Gemeinsame Patentklassifikation (CPC):
**G05D 1/0212; B60W 50/06; B62D 15/025;**
B60W 2050/0008; B60W 2050/0012;
B60W 2050/0033; B60W 2520/10; B60W 2520/125;
B60W 2520/14; B60W 2530/10; B60W 2540/18;
B60W 2552/30

(86) Internationale Anmeldenummer:
**PCT/EP2020/077178**

(87) Internationale Veröffentlichungsnummer:
**WO 2021/063918 (08.04.2021 Gazette 2021/14)**

(54) **TECHNIK ZUR TOTZEITKOMPENSATION BEI QUER- UND LÄNGSFÜHRUNG EINES KRAFTFAHRZEUGS**

TECHNOLOGY FOR DEAD TIME COMPENSATION DURING TRANSVERSAL AND LONGITUDINAL GUIDANCE OF A MOTOR VEHICLE

TECHNOLOGIE DE COMPENSATION DES TEMPS MORTS PENDANT LE GUIDAGE TRANSVERSAL ET LONGITUDINAL D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2019 DE 102019006935**

(43) Veröffentlichungstag der Anmeldung:
**10.08.2022 Patentblatt 2022/32**

(73) Patentinhaber: **MAN Truck & Bus SE**
**80995 München (DE)**

(72) Erfinder:
• NEULEN, Tobias
  80995 München (DE)
• GRITSCH, Stefan
  80995 München (DE)
• HILDEBRANDT, Arne-Christoph
  80995 München (DE)
• KRAUS, Sven
  80995 München (DE)

• STRAUSS, Peter
  80995 München (DE)

(74) Vertreter: **v. Bezold & Partner Patentanwälte - PartG mbB**
**Ridlerstraße 57**
**80339 München (DE)**

(56) Entgegenhaltungen:
**DE-A1-102014 215 243     DE-A1-102015 223 611**
**DE-A1-102016 201 205**

• MIZUTANI NAOTO ET AL: "Vehicle speed control by a robotic driver considering time delay and parametric variations", 2016 IEEE 55TH CONFERENCE ON DECISION AND CONTROL (CDC), IEEE, 12. Dezember 2016 (2016-12-12), Seiten 2437-2442, XP033030686, DOI: 10.1109/CDC.2016.7798627 [gefunden am 2016-12-27]

**Beschreibung**

Die Erfindung betrifft eine Vorrichtung und ein Verfahren zur Bestimmung und Kompensation einer Totzeit eines Aktors einer Querführung und/oder Längsfahrzeug eines Kraftfahrzeugs, insbesondere eines Nutzfahrzeugs.

Zum Stand der Technik wird zunächst auf das Dokument DE 10 2014 215 243 A1 verwiesen, das eine Querführungsregelungsstruktur mit einer oder mehreren Regelgrößen zur Erzeugung einer Lenkvorgabe einer Hilfskraftlenkung eines Kraftfahrzeugs beschreibt.

Fahrerassistenzsysteme (FAS, auch "Advanced Driver Assistance Systems" bzw. "ADAS") im Bereich schwerer Nutzfahrzeuge verfügen häufig über eine automatisierte Längsführung und/oder Querführung, bei der mittels geeigneter Sensorik die jeweilige Soll-Größe, welche auch als Referenzgröße bezeichnet werden kann, in Form beispielsweise einer gewünschten Geschwindigkeit bzw. eines gewünschten Abstands zu einem vorausfahrenden Fahrzeug, bzw. einer gewünschten relativen Abweichung zur Mitte der Fahrbahn ermittelt wird. Die verwendeten Regelstrategien berechnen in Abhängigkeit der Abweichung zwischen ermittelter Soll-Größe und gemessener Ist-Größe zu einem gegebenen Zeitpunkt die zur Einregelung der Soll-Größe erforderlichen Stellanteile für die Aktorik des Fahrzeugs, z.B. Bremse, Motor und Lenkung. Häufig besteht die Stellgröße der Regelung auch in einer weiteren Regelgröße, wie beispielsweise einer Soll-Beschleunigung, für eine unterlagerte Regelung zur Ansteuerung der Aktorik.

Bei herkömmlichen Systemen, beispielsweise einem Tempomat oder einem Abstandsregeltempomat, handelt es sich um Komfortsysteme, die den Fahrer in seiner Fahraufgabe unterstützen, ihn aber nicht von der Verantwortung der Fahraufgabe entbinden. Insofern ist es beispielsweise bei einem Tempomaten hauptsächlich relevant, die Soll-Größe stationär genau einzuregeln. Der Zeitpunkt des Erreichens der Soll-Geschwindigkeit ist in dieser Anwendung von untergeordneter Bedeutung. Bei sogenannten prädiktiven Tempomatsystemen wird zum Zweck der Effizienzsteigerung anstelle eines statisch vorgegebenen Geschwindigkeitsverlaufs ein hinsichtlich der Fahrbahntopographie optimaler Verlauf des Soll-Geschwindigkeitsprofils über die Ortskoordinaten eines vorausliegenden Streckenabschnitts berechnet.

Hier lässt sich ein Verbrauchsvorteil nur dann erzielen, wenn die Soll-Geschwindigkeit auch am vorgegebenen Ort eingeregelt wird. Die Genauigkeitsanforderungen sind hierbei jedoch infolge der geringen Änderungsraten der Topographie vergleichsweise gering.

Mit der Entwicklung von unterstützenden Assistenzfunktionen hin zum hochautomatisierten Fahren werden Eingangsgrößen für die Längsführung und Querführung herkömmlicherweise durch sogenannte Planungsalgorithmen bestimmt. Diese berechnen unter Berücksichtigung des Fahrtziels und des aus einer fahrzeugeigenen Onboard-Sensorik berechneten Umfeldmodells eine hinsichtlich geeigneter Gütekriterien optimierte Trajektorie als Referenz für die Fahrzeugregelung. Darunter kann eine Menge vorausliegender räumlich oder zeitlich diskretisierter Punkte eines Zustandsraums verstanden werden, die z.B. die zum jeweiligen Ort bzw. Zeitpunkt gehörige Soll-Beschleunigung, Soll-Geschwindigkeit und Ortskoordinaten in Längsrichtung und in Querrichtung sowie die Fahrspurkrümmung enthalten kann.

Da im Vergleich zu komfortorientierten Fahrfunktionen beim hochautomatisierten Fahren die Verantwortung für die Fahraufgabe an das FAS übergeht, entstehen insbesondere bei schweren Nutzfahrzeugen und in räumlich engen Fahrsituationen deutlich restriktivere Anforderungen an das räumliche und zeitliche Führungsverhalten der Regelung bzw. die Regelgenauigkeit. Je nach Situation kann hier die Einhaltung der Soll-Position und Soll-Orientierung des Fahrzeugs entlang der Soll-Trajektorie auf wenige Zentimeter bzw. deutlich weniger als ein Grad (1°) erforderlich sein, wie z.B. beim Rangieren eines Lastzugs innerhalb eines Containerterminals. Insbesondere bei der automatischen Durchführung von Spurwechseln oder Ausweichmanövern in Gegenwart anderer Verkehrsteilnehmer ist das Erreichen der Wegpunkte der Trajektorien zum jeweils möglichst exakt vorgegebenen Zeitpunkt aus Sicherheitsgründen von entscheidender Bedeutung.

Vor dem Hintergrund deutlich schärferer Genauigkeitsanforderungen fallen Trägheiten und Totzeiten innerhalb der Aktorik im Vergleich zu Komfortsystemen bei FASen erheblich stärker ins Gewicht. Trägheiten und Totzeiten sind bedingt durch eine Vielzahl technischer Einflüsse komplex zu modellieren und darüber hinaus zeit- und zustandsabhängig.

Wird die Trägheit und die Totzeit der Aktorik durch Planung und Regelung nicht berücksichtigt, so kommt es stets zu einer Diskrepanz zwischen Soll- und Ist-Verläufen der Trajektorien. Dies kann auch in vergleichsweise wenig anspruchsvollen Situationen zu unerwünschtem Fahr- und Planungsverhalten führen, etwa zu häufigem Zurücksetzen der Trajektorienplanung oder zu Instabilität innerhalb der Querführung. In dem Dokument EP 3 373 095 A1 wird beispielsweise eine Folgeregelung ("Pure-Pursuit-Regelung") in einem Fahrzeugverband (d.h. einem "Platoon") mit variabler Vorschau und Aktorträgheitskompensation durch einen "Lag-Kompensator" (auch "Lead-Leg-Kompensator") beschrieben, der die Phasenreserve des Systems erhöht.

Die darstellbare Präzision der Fahrzeugregelung hängt insbesondere im Bereich der Querdynamik auch von der Güte des im Planungsalgorithmus hinterlegten Dynamikmodells ab. Die hierin relevanten Größen, wie z.B. Reifenparameter oder Trägheitsmomente, sind häufig zeitlich veränderlich und wirken zusätzlich mit mehr oder weniger System, sind nicht oder nur sehr grob bekannt und nur mit hohem Aufwand zu ermitteln.

Somit besteht die Aufgabe, eine Vorrichtung und ein Verfahren zur Bestimmung und Kompensation der Totzeit eines Aktuators einer Querführung und/oder Längsfahrzeug eines Kraftfahrzeugs, insbesondere eines Nutzfahrzeugs bereitzustellen, welche die Genauigkeit der Querführung und/oder Längsführung verbessern. Alternativ oder ergänzend besteht die Aufgabe, Nichtlinearitäten in den Dynamikmodellen der Querführung und/oder der Längsführung zu schätzen und/oder die Totzeiten der Aktoren durch Schätzung von Nichtlinearitäten in den Dynamikmodellen der Querführung und der Längsführung zu berücksichtigen und/oder den Planungsalgorithmus der Querführung und/oder Längsführung zu optimieren.

Diese Aufgabe wird durch die Vorrichtung und das Verfahren sowie ein entsprechendes Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt der Erfindung ist eine Vorrichtung zur Bestimmung und Kompensation einer Totzeit mindestens eines Aktors zur Querführung und/oder Längsführung eines Kraftfahrzeugs, insbesondere eines Nutzfahrzeugs, bereitgestellt. Die Vorrichtung umfasst mindestens einen Sensor oder mindestens eine Sensorschnittstelle zur Erfassung mindestens eines Ist-Werts eines Bewegungszustands der Querführung und/oder der Längsführung. Ferner umfasst die Vorrichtung eine Bestimmungseinheit, die dazu ausgebildet ist, die Totzeit des mindestens einen Aktors durch Vergleichen mindestens eines aus einem Dynamikmodell der Querführung und/oder Längsführung des Kraftfahrzeugs berechneten Soll-Werts des Bewegungszustands mit dem erfassten mindestens einen Ist-Wert zu bestimmen. Ferner umfasst die Vorrichtung eine Regelungseinheit, die dazu ausgebildet ist, abhängig vom erfassten mindestens einen Ist-Wert des Bewegungszustands und der bestimmten Totzeit des mindestens einen Aktors den mindestens einen Aktor zu regeln, wobei die Regelungseinheit um die Totzeit zeitlich vorauslaufende Steuersignale an den mindestens einen Aktor ausgibt.

Der mindestens eine Sensor oder die mindestens eine Sensorschnittstelle zur Erfassung des Ist-Werts des Bewegungszustands des Kraftfahrzeugs kann einen Lenkwinkelmesser, einen Drehzahlmesser, einen Radarsensor (beispielsweise an einer Front des Kraftfahrzeugs), eine Kamera (beispielsweise im optischen oder infraroten Spektrum) und/oder einen Lidar-Sensor (d.h. ein Sensor zur richtungsaufgelösten Abstandsmessung oder mittels "light detection and ranging", LIDAR) umfassen bzw. mit einem solchen zum Datenaustausch verbunden sein. Alternativ oder ergänzend können Bewegungszustände eines vorausfahrenden Fahrzeugs über Funkverbindung von dem vorausfahrenden Fahrzeug empfangen werden. Beispielsweise kann der Abstand oder die Relativgeschwindigkeit zu dem vorausfahrenden Fahrzeug von der Sensorik des Kraftfahrzeugs erfasst werden und die absolute Geschwindigkeit des vorausfahrenden Fahrzeugs über die Funkverbindung empfangen werden. Weiterhin alternativ oder ergänzend kann die Sensorschnittstelle Daten von einem Navigationssatellitensystem, beispielsweise von einem "Global Positioning System" (GPS), empfangen.

Der Bewegungszustand kann eine Regelgröße der Regelungseinheit sein. Insbesondere können die ausgegebenen Steuersignale mittels des mindestens einen Aktors eine Veränderung des Bewegungszustands bewirken in Abhängigkeit vom erfassten mindestens einen Ist-Wert des Bewegungszustands.

Das Dynamikmodell kann eine quantitative (insbesondere numerische) Beschreibung der zeitlichen Entwicklung des Bewegungszustands der Querführung und/oder der Längsführung des Kraftfahrzeugs sein. Der Bewegungszustand kann ein Punkt in einem Zustandsraum des Dynamikmodells des Kraftfahrzeugs sein.

Die Regelungseinheit kann dazu ausgebildet sein, den mindestens einen Aktor unter Verwendung des Dynamikmodells zu regeln, wobei optional die Totzeit ein Parameter des Dynamikmodells ist und/oder der Bewegungszustand eine dynamische Größe (d.h., eine Variable) des Dynamikmodells ist. Die Totzeit des mindestens einen Aktors kann auch als Aktortotzeit bezeichnet werden.

Das Dynamikmodell kann auch als dynamisches Modell oder Bewegungsmodell des Kraftfahrzeugs bezeichnet werden. Der Aktor kann auch als Aktuator bezeichnet werden. Der Soll-Wert kann auch als Sollvorgabe oder geforderter Wert bezeichnet werden. Der Ist-Wert kann auch als Ausgangsgröße oder gemessener Wert bezeichnet werden.

Der Soll-Wert und der Ist-Wert können sich auf einen übereinstimmenden Zeitpunkt $t_1$ beziehen. Der Soll-Wert kann durch Auswertung des Dynamikmodells zum Zeitpunkt $t_1$ bestimmt werden, wobei das Dynamikmodell mit einem zu einem Zeitpunkt $t_0$ erfassten Ist-Wert des Bewegungszustands initialisiert ist. Der Zeitpunkt $t_0$ kann zeitlich vor dem Zeitpunkt $t_1$ liegen.

Das Dynamikmodell kann ein Übertragungsverhalten zwischen Soll-Wert und Ist-Wert mittels einer Übertragungsfunktion beschreiben, beispielsweise im Frequenzbereich und/oder durch Kombination eines Verzögerungsglieds erster oder höherer Ordnung und eines Totzeitglieds. Das Verzögerungsglied, beispielsweise ein PT1-Glied, der Übertragungsfunktion kann ein proportionales Übertragungsverhalten mit Verzögerung erster Ordnung und mit einem Verstärkungsfaktor K des Aktuators beschreiben. Das Totzeitglied kann eine Zeitspanne zwischen einer Signaländerung am Systemeingang und der Signalantwort am Systemausgang beschreiben. Die Übertragungsfunktion des Dynamikmodells kann ein Produkt der Übertragungsfunktionen des Verzögerungsglieds, beispielsweise einer inversen linearen Funktion der Zeitkonstante des Verzögerungsglieds, und des Totzeitglieds, insbesondere einer exponentiellen Abhängigkeit von der Totzeit, umfassen. Das Dynamikmodell kann für Beschleunigungsvorgänge und Bremsvorgänge unterschiedliche Übertragungsfunktionen umfassen.

Zumindest in einem Ausführungsbeispiel kann mittels des mindestens einen Sensors und der Bestimmungseinheit die Totzeit des Aktors im Dynamikmodell und damit bei der Regelung angepasst und/oder berücksichtigt werden, beispielsweise ohne zusätzliche Sensoren zur dezidierten Messung der Totzeit zu verbauen. Im selben oder einem weiteren Ausführungsbeispiel kann das Kraftfahrzeug selbst, beispielsweise ohne externe Messtechnik bei einer Inspektion und/oder während der Nutzung (insbesondere während der Fahrt oder wenn es abgestellt ist), die Totzeit bestimmen und/oder korrigieren. Im selben oder einem weiteren Ausführungsbeispiel kann die zeitlich vorauslaufende Ausgabe der Steuersignale die Totzeit kompensieren.

Die Vorrichtung kann ferner eine Speichereinheit umfassen, die dazu ausgebildet ist, den erfassten mindestens einen Ist-Wert zu speichern. Der mindestens eine Sensor oder die mindestens eine Sensorschnittstelle kann den erfassten mindestens einen Ist-Wert an die Speichereinheit ausgeben. Die Bestimmungseinheit kann dazu ausgebildet sein, den erfassten mindestens einen Ist-Wert aus der Speichereinheit auszulesen oder von der Speichereinheit zu empfangen. Die Bestimmungseinheit kann eine fahrzeuginterne Recheneinheit umfassen. Alternativ oder ergänzend kann die Bestimmungseinheit eine fahrzeugexterne Recheneinheit, beispielsweise eine zentrale Recheneinheit eines Fahrzeugflottenbetreibers, umfassen.

Gemäß einem zweiten Aspekt wird ein Verfahren zur Bestimmung und Kompensation einer Totzeit mindestens eines Aktors zur Querführung und/oder Längsführung eines Kraftfahrzeugs, insbesondere eines Nutzfahrzeugs, bereitgestellt. Das Verfahren umfasst den Schritt des Erfassens mindestens eines Ist-Werts eines Bewegungszustands der Querführung und/oder Längsführung mittels mindestens eines Sensors oder mindestens einer Sensorschnittstelle. Ferner umfasst das Verfahren den Schritt des Bestimmens einer Totzeit des mindestens einen Aktors durch Vergleich mindestens eines aus einem Dynamikmodell berechneten Soll-Werts des Bewegungszustands mit dem erfassten mindestens einen Ist-Wert. Das Verfahren umfasst ferner den Schritt des Regelns der Totzeit des mindestens einen Aktors abhängig vom erfassten Ist-Zustand, wobei eine Regelungseinheit der Querführung und/oder Längsführung um die Totzeit zeitlich vorauslaufende Steuersignale an den Aktor ausgibt.

Optional umfasst das Verfahren einen Schritt des Speicherns des erfassten mindestens einen Ist-Wertes.

Nachfolgende Merkmale beziehen sich sowohl auf die Vorrichtung des ersten Aspekts als auch auf das Verfahren des zweiten Aspekts. Wenngleich im Folgenden Vorrichtungsmerkmale des ersten Aspekts beschrieben sind, gelten diese auch als entsprechende Verfahrensschritte des zweiten Aspekts.

Der mindestens eine Sensor oder die mindestens eine Sensorschnittstelle kann ein Empfangsmodul zum Empfangen von Signalen eines globalen Navigationssatellitensystems umfassen, vorzugsweise einschließlich differenziellen Korrektursignalen. Das globale Navigationssatellitensystem kann das sogenannte Global Positioning System (GPS) umfassen. Die differenziellen Korrektursignale können dem Differential GPS (DGPS) entsprechen.

Das Dynamikmodell kann ein kinematisches Einspurmodell umfassen. Der Bewegungszustand kann einen Lenkwinkel eines Rads und einen Betrag der Geschwindigkeit des Kraftfahrzeugs umfassen. Bei einer Hinterachslenkung des Kraftfahrzeugs kann der Lenkwinkel beispielsweise der Lenkwinkel des hinteren Rads sein.

Das kinematische Einspurmodell kann gekoppelte Differentialgleichungen (beispielsweise lineare Differentialgleichungen erster Ordnung) für eine Ortskoordinate der Längsführung des Kraftfahrzeugs (die auch als Ortskoordinate in Längsrichtung bezeichnet wird), eine Ortskoordinate der Querführung des Kraftfahrzeugs (die auch als Ortskoordinate in Querrichtung bezeichnet wird) und/oder einen Gierwinkel des Kraftfahrzeugs umfassen. Die Gierrate, d.h. die

Änderung des Gierwinkels, kann eine Funktion des Lenkwinkels und optional der Geschwindigkeit (beispielsweise des Betrags der Geschwindigkeit) des Kraftfahrzeugs sein. Ein Radstand des Kraftfahrzeugs kann ein (z.B. freier) Parameter des Dynamikmodells sein. Ferner kann der Gierwinkel von einem Parameter des Dynamikmodells abhängig sein, beispielsweise vom Radstand des Kraftfahrzeugs.

Alternativ oder ergänzend kann das Dynamikmodell Schräglaufsteifigkeiten an Vorder- und Hinterachse, Schwerpunktabstände von Vorder- und Hinterachse, eine Masse des Kraftfahrzeugs und/oder ein Trägheitsmoment um eine Hochachse des Kraftfahrzeugs als Parameter umfassen. Das Dynamikmodell mit Schräglaufsteifigkeiten kann ein gekoppeltes (z.B. lineares) Differentialgleichungssystem erster Ordnung für die Änderung der Ortskoordinate in Querrichtung des Kraftfahrzeugs und die Gierrate umfassen.

Die Bestimmungseinheit und/oder die Regelungseinheit können ferner dazu ausgebildet sein, eine zeitliche Serie von *N* zukünftigen Soll-Werten des Bewegungszustands, insbesondere Soll-Werten des Lenkwinkels und/oder der Beschleunigung, mittels des dynamischen Models vorauszuberechnen, wobei *N* eine natürliche Zahl ist. Die Bestimmungseinheit kann die Totzeit der Querführung und/oder der Längsführung bestimmen aufgrund einer zeitlichen Position jenes Soll-Werts in der zeitlichen Serie, der eine minimale Abweichung vom erfassten Ist-Wert des Bewegungszustands, insbesondere vom erfassten Ist-Wert des Lenkwinkels und/oder der Beschleunigung, aufweist.

Das Vorausberechnen mittels des Dynamikmodells kann auch als modellprädikative Berechnung oder modellprädiktive Berechnung bezeichnet werden. Die Totzeit des Aktors der Querführung kann bestimmt werden, indem jeweils die Differenz eines modellprädikativ berechneten Soll-Lenkradwinkels und des zugehörigen, insbesondere demselben Zeitpunkt zugeordneten, erfassten Ist-Lenkradwinkels berechnet und das Minimum aller Differenzen bestimmt wird. Alternativ oder ergänzend kann eine Serie von modellprädikativ berechneten Soll-Lenkradwinkeln mit einem einzigen erfassten Ist-Lenkradwinkel verglichen werden. In einer weiteren Alternative kann eine Serie von erfassten Ist-Lenkradwinkeln mit einem einzigen Soll-Lenkradwinkel verglichen werden. Die Totzeit des Aktors der Längsführung kann bestimmt werden, indem jeweils die Differenz einer modellprädikativ berechneten Soll-Beschleunigung und der zugehörigen, insbesondere demselben Zeitpunkt zugeordneten, erfassen Ist-Beschleunigung berechnet und das Minimum aller Differenzen bestimmt wird. Alternativ oder ergänzend kann eine Serie von modellprädikativ berechneten Soll-Beschleunigungen mit einer einzigen erfassten Ist-Beschleunigung verglichen werden. In einer weiteren Alternative kann eine Serie von erfassten Ist-Beschleunigungen mit einer einzigen Soll-Beschleunigung verglichen werden.

Jedem (beispielsweise diskreten) Index $i=1..N$ der Serie kann vorteilhafterweise ein Zeitpunkt $t_i$ zugeordnet sein oder entsprechen. Die Serie der mit $i=1..N$ indizierten zukünftigen Soll-Werte zu den Zeitpunkten $t_i$ kann basierend auf einem zum Zeitpunkt to gemessenen Ist-Wert als Anfangswert berechnet werden. Die Zeitpunkte können in aufsteigender Reihenfolge geordnet sein, d.h. $t_0 < t_1 < .. < t_N$. Der Vergleich des oder der Soll-Werte mit zu den Zeitpunkten $t_i$ gemessenen Ist-Werten kann direkt nach dem Zeitpunkt $t_i$ erfolgen. Alternativ oder ergänzend können der oder die Soll-Werte und Ist-Werte nach einem Endzeitpunkt, beispielsweise $t_N$, verglichen werden. Aus dem Index i des Minimums der Differenz von Soll-Wert (z.B. Soll-Wert des Lenkradwinkels) und Ist-Wert (z.B. Ist-Wert des Lenkradwinkels) kann die Totzeit des Aktors bestimmt werden.

Die Totzeiten der Querführung und/oder der Längsführung können mittels eines künstlichen neuronalen Netzes berechnet werden. Das künstliche neuronale Netz kann ein sogenanntes "General Regression Neural Network" (GRNN) umfassen.

Eine Übertragungsfunktion des Dynamikmodells der Querführung und/oder Längsführung kann ein PT1-Glied (beispielsweise als Faktor, insbesondere im Frequenzraum) umfassen. Die Bestimmungseinheit kann ferner dazu ausgebildet sein, das PT1-Glied der Übertragungsfunktion durch Bestimmen von mindestens einem Parameter des PT1-Glieds und/oder aus einer Liste von PT1-Gliedern zu bestimmen, indem der mindestens eine aus dem Dynamikmodell berechnete Soll-Wert mit dem erfassten mindestens einen Ist-Wert verglichen wird. Eine Liste der Dynamikmodelle kann die Liste der PT1-Glieder umfassen. Die Übertragungsfunktion im Frequenzraum kann einem Produkt aus einem exponentiellen Term, der die Totzeit des Aktors beschreibt, und polynomialen Termen im Zähler und Nenner eines Verzögerungsglieds umfassen. Ein PT1-Glied kann einem linearen Polynom im Nenner eines Verzögerungsglieds entsprechen.

Das PT1-Glied kann ein lineares (d.h. "P" für "proportional") Übertragungsglied erster Ordnung (d.h. "1" für erste Ordnung) in der Zeit (d.h., "time" für "T") sein. Das PT1-Glied kann eine Relaxationszeit der Querführung und/oder Längsführung modellieren. Die Liste von PT1-Gliedern kann unterschiedlichen Relaxationszeiten entsprechen.

Die Übertragungsfunktion kann die mittels des Aktors bewirkte Querführung und/oder Längsführung modellieren. Die Übertragungsfunktion kann einen Wirkungszusammen-hang der mittels des Aktors bewirkten Querführung und/oder Längsführung repräsentieren. In einer Frequenzraumdarstellung kann die Übertragungsfunktion ein Quotient aus dem Bewegungszustand (als einem Ausgangssignal der mittels des Aktors bewirkten Querführung und/oder Längsführung) und dem an den Aktor ausgegebenen Steuersignal (als Eingangssignal der mittels des Aktors bewirkten Querführung und/oder Längsführung) sein.

Eine Übertragungsfunktion des Dynamikmodells der Querführung und/oder Längsführung kann ein PD1-Glied (beispielsweise als Faktor, insbesondere im Frequenzraum) umfassen. Die Bestimmungseinheit und/oder die Regelungseinheit können ferner dazu ausgebildet sein, die Trägheit des Aktors zu bestimmen bzw. zu kompensieren. Die Trägheit des Aktors kann durch ein Polynom im Zähler des Verzögerungsglieds der Übertragungsfunktion im Frequenzraum kompensiert werden. Das PD1-Glied kann einen linearen (d.h., "P" für "proportional") Regler mit einem differenzierenden (d.h., "D" für "differential") Anteil erster Ordnung umfassen.

Die Querführung und/oder die Längsführung können eine Folgeregelung für ein Fahrzeug in einem Fahrzeugverband umfassen. Ein Fahrzeugverband kann auch als Platoon bezeichnet werden. Die Folgeregelung kann eine sogenannte Pure-Pursuit-Regelung mit variabler Vorausschau und Aktorträgheitskompensation umfassen. Die variable Vorausschau kann eine (beispielsweise lineare) Abhängigkeit eines Soll-Lenkwinkels eines Folgefahrzeugs von einem (vorzugsweise um eine Zeitkonstante versetzten) Ist-Lenkwinkel des vorausfahrenden Fahrzeugs im Fahrzeugverband umfassen. Die Aktorträgheitskompensation kann auch als Lag-Kompensation oder Lead-Lag-Kompensation bezeichnet werden. Die Lag-Kompensation kann eine Dominantpolkompensation umfassen, die als zusätzliches Übertragungsglied in die Übertragungsfunktion des Aktors eingeht. Die Zeitkonstante des Lag-Kompensationsglieds kann verschieden sein von der Zeitkonstante der anderen Übertragungsfunktionsglieder. Insbesondere kann die Zeitkonstante des Lag-Kompensationsglieds kleiner sein als die Zeitkonstante eines PT1-Glieds oder eines polynomialen Glieds höherer Ordnung.

Die Bestimmungseinheit und/oder die Regelungseinheit können dazu ausgebildet sein, Modellparameter des Dynamikmodells während des Fahrbetriebs zu ändern und/oder mindestens eine Schnittstelle zur Änderung von Modellparametern des Dynamikmodells während des Fahrbetriebs umfassen. Hierin kann die Zeitangabe "während des Fahrbetriebs" auch als "zur Laufzeit" realisiert sein.

Modellparameter des Dynamikmodells können Schräglaufsteifigkeiten an Vorder- und Hinterachse, Schwerpunktabstände von Vorder- und Hinterachse, eine Masse des Kraftfahrzeugs, Trägheitsmomente (beispielsweise um eine Hochachse des Kraftfahrzeugs), Reifenparameter, einen Rollwiderstand, Trägheiten von Aktoren und/oder Totzeiten von Aktoren umfassen.

Eine Schätzung von Parametern des Dynamikmodells kann abhängig von einem erkannten Fahrbetriebszustand angepasst werden. Der Fahrbetriebszustand kann ein Fahrmanöver umfassen. Der Fahrbetriebszustand kann eine Fahrt mit konstanter Geschwindigkeit, eine Beschleunigung, einen Bremsvorgang und/oder einen Spurwechselvorgang umfassen.

Eine Initialisierung (beispielsweise eines Schätzwertes) eines Modellparameters des Dynamikmodells kann mit gemessenen oder empirisch bestimmten Anfangswerten und/oder außerhalb des Fahrbetriebs oder durch offline-Fitting bestimmten Anfangswerten erfolgen und/oder auf einen physikalisch sinnvollen Wertebereich begrenzt sein. Unter "offline" wird eine Berechnung jenseits des laufenden Fahrbetriebs verstanden. Insbesondere kann eine Berechnung mittels eines künstlichen neuronalen Netzwerks, beispielsweise eines "General Regression Neural Network" (GRNN), durchgeführt werden. Eine Berechnung während des laufenden Fahrbetriebs wird auch als online-Berechnung bezeichnet. Alternativ oder ergänzend kann eine online-Berechnung eine Funkverbindung des Kraftfahrzeugs mit einer externen Berechnungseinheit, beispielsweise einem Computersystem des Fuhrparkbetreibers, umfassen. Die online-Berechnung kann fahrzeugintern oder fahrzeugextern erfolgen.

Ferner kann der virtuelle Radstand des kinematischen Einspurmodells geschätzt werden.

Ein virtueller Radstand kann eine Schätzung des tatsächlichen Radstands des Fahrzeugs umfassen. Alternativ oder ergänzend kann der virtuelle Radstand weitere Effekte berücksichtigen, beispielsweise die Schräglaufsteifigkeiten.

Mindestens einer der Parameter aus der Menge einer Querbeschleunigung, eines Lenkradwinkels, einer Gierrate und einer Krümmung der Trajektorie des Kraftfahrzeugs kann einen Eingangsraum eines künstlichen neuronalen Netzwerkes, insbesondere zur Schätzung des virtuellen Radstands, aufspannen. Der Schätzwert des virtuellen Radstands kann in das Dynamikmodell der Bestimmungseinheit und/oder der Regelungseinheit eingespeist werden.

Gemäß einem weiteren Aspekt ist ein Kraftfahrzeug, insbesondere ein Nutzfahrzeug, bereitgestellt, das eine Vorrichtung gemäß dem vorstehenden Aspekt zur Bestimmung und Kompensation einer Totzeit mindestens eines Aktors zur Querführung und/oder Längsführung umfasst. Alternativ oder ergänzend wird ein Kraftfahrzeug bereitgestellt, welches dazu ausgebildet ist, das Verfahren gemäß dem vorstehenden zweiten Aspekt zur Bestimmung und Kompensation einer Totzeit auszuführen.

In jedem Aspekt kann das Nutzfahrzeug ein Lastkraftwagen (LKW), eine Zugmaschine, ein Omnibus oder ein Kranwagen sein.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:

Figur 1     ein Ausführungsbeispiel eines Verfahrens zur Bestimmung und Kompensation einer Totzeit einer Aktorik;

Figur 2     ein Ausführungsbeispiel einer Vorrichtung, die dazu ausgebildet ist, das Verfahren gemäß Figur 1 auszuführen;

Figur 3     ein schematisches künstliches neuronales Netzwerk;

Figur 4     ein Beispiel einer Instabilität in der Querführung in Abhängigkeit der Totzeit; und

Figur 5     ein Beispiel einer Kompensation der Totzeit bei modellprädikativer Regelung.

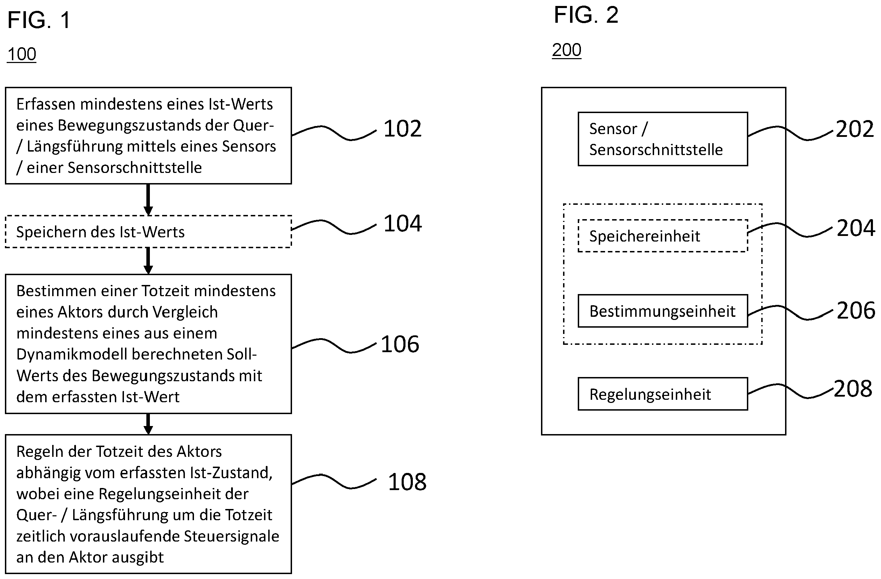

Figur 1 zeigt ein Ausführungsbeispiel eines allgemein mit Bezugszeichen 100 bezeichneten Verfahrens zur Bestimmung und Kompensation der Totzeit eines Aktors der Querführung und/oder der Längsführung eines Kraftfahrzeugs, insbesondere eines Nutzfahrzeugs. In einem ersten Schritt 102 des Verfahrens 100 werden ein oder mehrere Ist-Werte des Bewegungszustands der Querführung und/oder der Längsführung des Fahrzeugs mittels eines Sensors oder einer Sensorschnittstelle erfasst. In einem optionalen Schritt 104 können der Ist-Wert oder die Ist-Werte gespeichert werden. In einem weiteren Schritt 106 wird die Totzeit des Aktors durch Vergleich des Ist-Werts oder der Ist-Werte mit aus einem Dynamikmodell berechneten Soll-Wert(en) bestimmt. Im Schritt 108 wird die Totzeit des Aktors geregelt, indem die Querführung und/oder die Längsführung um die Totzeit zeitlich vorauslaufende Steuersignale an den Aktor sendet.

Figur 2 zeigt ein Ausführungsbeispiel einer allgemein mit Bezugszeichen 200 bezeichneten Vorrichtung zur Bestimmung und Kompensation der Totzeit eines Aktors eines Kraftfahrzeugs am Beispiel eines Nutzfahrzeugs. Die Vorrichtung 200 umfasst einen Sensor 202 oder eine Sensorschnittstelle, der oder die dazu ausgebildet ist, den Schritt 102 der Erfassung von Ist-Wert(en) des Bewegungszustands durchzuführen. Optional umfasst die Vorrichtung 200 eine Speichereinheit 204, die dazu ausgebildet ist, den Schritt 104 des Speicherns des/der Ist-Wert(e) durchzuführen. Ferner umfasst die Vorrichtung 200 eine Bestimmungseinheit 206, die dazu ausgebildet ist, den Schritt 106 der Bestimmung der Totzeit des Aktors auszuführen anhand eines Vergleichs ermittelter Soll-Werte und gemessener Ist-Werte. Die Regelungseinheit 208 der Vorrichtung 200 ist dazu ausgebildet, den Schritt 108 der Regelung der Totzeit des Aktors durch eine zeitlich vorauslaufende Ausgabe der Steuersignale auszuführen. Alle Einheiten 204, 206, 208 und Sensoren 202 oder Sensorschnittstellen können fahrzeugintern sein. Alternativ oder ergänzend können die Speichereinheit 204 und/oder die Bestimmungseinheit 206 fahrzeugextern sein. Beispielsweise kann der eine oder mehrere erfasste Ist-Wert(e) des Bewegungszustands während dem Fahrbetrieb über eine Funkverbindung an den Betreiber der Fahrzeugflotte gesendet werden, zu der das Nutzfahrzeug gehört. Eine zentrale, insbesondere fahrzeugexterne, Bestimmungseinheit 206 kann die Totzeit aufgrund der empfangenen Ist-Werte bestimmen und über die oder eine weitere Funkverbindung an das Nutzfahrzeug während des Fahrbetriebs senden. Alternativ oder ergänzend kann der eine oder mehrere Ist-Werte während des Fahrbetriebs auf einer fahrzeuginternen Speichereinheit 204 gespeichert werden. Die Daten der Speichereinheit 204 können außerhalb des Fahrbetriebs, beispielsweise während einer Wartung oder beim Parken auf dem Fuhrpark des Fuhrunternehmens, von einer fahrzeugexternen Bestimmungseinheit 206 ausgelesen werden. Die fahrzeugexterne Bestimmungseinheit 206 kann die Totzeit anhand der ausgelesenen Daten, insbesondere vergangene Ist-Werte des Bewegungszustands, bestimmen und an die fahrzeuginterne Regelungseinheit 208 des Nutzfahrzeugs übermitteln.

In herkömmlichen Verfahren zum mindestens teilautomatisierten Betrieb von Fahrzeugen wird mittels eines Bewegungs-Planungsalgorithmus basierend auf einem, unter anderem mittels Umfeldsensorik und hochgenauen digitalen Kartendaten erzeugten, Umfeldmodell ein für die gegebene Fahraufgabe passender, zukünftiger Soll-Fahrzustand bestimmt, der einer Fahrzeuglängsführung und Fahrzeugquerführung (im Folgenden auch als Folgeregelung bezeichnet) als Soll-Wert übergeben wird. Der durch die Bewegungsplanung bestimmte Soll-Fahrzustand $x_{soll,t}$ kann dabei die zu einem festen Zeitpunkt $t$ oder Ort gehörigen Soll-Werte, insbesondere in Längsrichtung und Querrichtung des Fahrzeugs, für Ortskoordinaten $(x,y)$, Geschwindigkeiten $(v_x,v_y)$, Beschleunigung $(a_x, a_y)$ entlang verschiedener Koordinatenachsen und/oder Gierwinkel $\psi$ und Gierrate (zeitliche Änderung des Gierwinkels $\dot{\psi}$) enthalten:

$$x_{soll,t} = \left[t, x, y, v_x, v_y, a_x, a_y, \dot{\psi}, ... \right]^T .$$

Eine Menge von N räumlich oder zeitlich diskretisierten Soll-Fahrzuständen, zumeist innerhalb eines gewissen zeitlichen und/oder örtlichen Vorausschauhorizonts, wird dabei als Soll-Trajektorie $X_{soll}$ bezeichnet:

$$X_{soll} = \{x_{soll,t0}, x_{soll,t1}, ..., x_{soll,tN}\} .$$

Hierbei sind die Soll-Fahrzustände von einem Anfangszeitpunkt $t_0$ an zeitlich geordnet ($t_0 < t_1 < .. < t_N$). Herkömm-liche Verfahren zur Bewegungsplanung nutzen dabei infolge begrenzter Rechenleistung stark vereinfachte Bewegungsmodelle, um innerhalb eines gegebenen Vorausschauhorizonts verschiedene Mengen von Fahrzeugzuständen zu berechnen, die zum gewählten Fahrtziel führen. In einem Optimierungsschritt wird unter Berücksichtigung fahrzeugspezifischer Randbedingungen, beispielsweise der Masse des Fahrzeugs und/oder eines Beladungszustands und/oder eines Beschleunigungsvermögens, die hinsichtlich geeigneter Gütekriterien optimale Soll-Trajektorie identifiziert und der Folgeregelung übergeben.

Hierin kann Aktorik, insbesondere Fahrzeugaktorik, eine Mehrzahl der Aktoren des Kraftfahrzeugs bezeichnen.

Die Aufgabe der Folgeregelung besteht anschließend darin, geeignete Vorgaben für die Fahrzeugaktorik (Motor, Getriebe, Bremse, Lenkung) zu berechnen, um den Ist-Zustand $x_{ist,t}$ des Fahrzeugs dem Soll-Zustand entlang der Trajektorie $X_{soll}$ anzugleichen. Einige herkömmliche Regelstrategien entnehmen der (insbesondere Soll-) Trajektorie einen Referenzzustand $x_{soll,tk}$, wobei die zeitliche Vorausschau in Abhängigkeit von Fahrgeschwindigkeit und Stelldynamik gewählt werden kann. $k$ ist hierbei ein fest gewählter Index eines Punkts auf einer Soll-Trajektorie $X_{soll}$. Andere herkömmliche Regelstrategien nutzen in modellprädiktiven Verfahren mehrere (insbesondere Soll-) Zustände oder die gesamte (insbesondere Soll-) Trajektorie, um ein hinsichtlich Stellaufwand und Folgeverhalten optimales Fahrprofil umzusetzen. Beide Verfahren nutzen folglich implizites oder explizites Wissen über die Dynamik des automatisierten Fahrzeugs.

Wenn die für die Bewegungsplanung herkömmlicherweise eingesetzten Dynamikmodelle das Fahrzeug unzureichend abbilden, steigt die Wahrscheinlichkeit, dass das durch die Folgeregelung geführte Fahrzeug der (Soll-) Trajektorie nicht mit der geforderten Genauigkeit folgen kann. Auch steigt die Wahrscheinlichkeit, dass das durch die Folgeregelung geführte Fahrzeug der (Soll-) Trajektorie nicht mehr mit der geforderten Genauigkeit folgen kann, wenn die in der Regelung genutzte explizit oder implizit modellierte Dynamik des Fahrzeugs stark vom realen Fahrzeugverhalten abweicht. Die Regelgenauigkeit, mit der das automatisierte Fahrzeug der durch die Planung vorgegebenen (Soll-) Trajektorie folgt, abhängt davon ab, wie präzise die in Planung und Regelung eingesetzten Modelle der Fahrzeugdynamik das reale Fahrzeugverhalten beschreiben.

Infolge der begrenzten verfügbaren, insbesondere fahrzeuginternen, Rechenleistung ist es nur begrenzt zielführend, die Genauigkeit der Dynamikmodelle durch eine starke Erhöhung der Modelltiefe bzw. Modellordnung zu erhöhen. Viele die Dynamik beeinflussende Parameter, wie etwa Reifenschräglaufsteifigkeiten oder Geradeauslaufverhalten, sind nur schwer messbar und/oder zeitlich veränderlich, so dass auch der Ansatz, möglichst viele physikalische Parameter messtechnisch zu erfassen und im Modell zu berücksichtigen, im Ergebnis, insbesondere bei einer kontinuierlichen Anpassung während des Fahrtbetriebs, limitiert ist.

Ausführungsbeispiele der Vorrichtung ermöglichen durch geeignete Berechnungsverfahren dominante, nicht durch simple Bewegungsmodelle abgebildete (beispielsweise nichtlineare) Dynamikanteile zur Laufzeit innerhalb geeigneter Fahrsituationen zu ermitteln. Die ermittelten Dynamikanteile werden in wenige, nicht notwendigerweise physikalisch motivierte, Modellparameter überführt und an den Planungsregelungsalgorithmus und/oder den Folgeregelungsalgorithmus des Fahrzeugs übermittelt. Durch die Adaption der Bewegungsplanung und Folgeregelung in Abhängigkeit der geschätzten Dynamikanteile wird im Zusammenspiel beider Komponenten (Bewegungsplanung und Folgeregelung) eine Erhöhung der Genauigkeit erreicht, mit der das Fahrzeug automatisiert einer gegebenen Trajektorie folgt.

Vorzugsweise umfasst die Vorrichtung und das Verfahrens zur Bestimmung und Kompensation einer Totzeit eines Aktors die Speicherung von Vergangenheitswerten von Soll-Fahrzuständen (entlang der Soll-Trajektorien) und von Ist-Fahrzuständen, die durch geeignete Sensorik im und/oder am Fahrzeug erfasst werden.

Eine vorteilhafte Ausführung des Verfahrens 100 verfügt über eine Sensorik, beispielsweise eine hochgenaue DGPS-gestützte Intertialmesssensorik, zur präzisen Bestimmung der Position und des Bewegungszustands des Fahrzeugs. Das Fahrzeug kann auch als Ego-Fahrzeug bezeichnet werden. Eine weitere Ausführung des Verfahrens 100 weist eine Selbstlokalisierungsfunktion unter Nutzung von GPS, Eigenbewegungsdaten der fahrzeugeigenen Sensorik, sowie des Umfeldmodells auf.

Ein Bestandteil des Verfahrens 100 umfasst vorzugsweise die Modellierung von Totzeiten und/oder Trägheiten der längsdynamischen und/oder querdynamischen Aktorik innerhalb der Planung und/oder Regelung. Das Übertragungsverhalten zwischen Soll-Vorgabe und Ausgangsgröße des Aktors kann vereinfacht unter Nutzung einer in der Systemtheorie und Regelungstechnik verbreiteten Übertragungsfunktion im Frequenzbereich gemäß Gleichung (1) durch Kombination, insbesondere ein Produkt, eines Verzögerungsglieds erster (oder höherer) Ordnung, beispielsweise eines PT1-Gliedes, und eines Totzeitglieds beschrieben werden:

$$G_A(s) = \frac{Y_A(s)}{U_A(s)} = \frac{K_A}{T_A\,s+1} \cdot e^{-T_T\,s} \ . \tag{1}$$

Darin sind $K_A$ die stationäre Verstärkung und $T_A$ die Zeitkonstante des Verzögerungsglieds, $T_T$ ist die Totzeit, und s ist die unabhängige komplexe Variable im Frequenzbereich. In einer vorteilhaften Ausführung des Verfahrens 100 werden für Beschleunigungsvorgänge und Bremsvorgänge unterschiedliche Übertragungsfunktionen angesetzt.

Ein weiterer Bestandteil des Verfahrens 100 besteht in der Modellierung der Querdynamik des Fahrzeugs innerhalb der Planung und der Regelung. Gemäß einem Ausführungsbeispiel des Verfahrens 100 wird als Dynamikmodell das kinematisches Einspurmodell gemäß Gleichung (2) verwendet. Darin ist $\delta_{wheel}$ der Lenkwinkel des Rades des modellierten einspurigen Fahrzeugs, $v$ der Betrag der Geschwindigkeit und $l$ der Radstand, welcher als freier Parameter die Dynamik des Fahrzeugs abbildet. $x, y, \psi$ sind jeweils die Längskoordinate, die Querkoordinaten und der Gierwinkel:

$$\dot{\psi} = \frac{v}{l} \cdot \tan(\delta_{wheel}) \, , \quad \dot{x} = v \cdot \cos(\psi) \, , \quad \dot{y} = v \cdot \sin(\psi) \ . \tag{2}$$

Gemäß einem weiteren Ausführungsbeispiel, das mit dem vorstehenden Ausführungsbeispiel kombinierbar ist, wird das Dynamikmodell gemäß Gleichung (3) eingesetzt. Darin sind $c_v$ und $c_h$ (die Schräglaufsteifigkeiten an Vorder- und Hinterachse), $l_v$ und $l_h$ (die Schwerpunktabstände von Vorder- und Hinterachse), $m$ (die Masse des Fahrzeugs) und $J_z$ (das Trägheitsmoment um die Hochachse) die freien Parameter zur Beschreibung der Dynamik des Fahrzeugs, und $\delta_{LRW}$ ist der Lenkradwinkel. Im Vergleich zu dem Ausführungsbeispiel gemäß Gleichung (2) kann dieses Ausführungsbeispiel die Querbewegung des Fahrzeugs auch im dynamischen Bereich mit nicht verschwindenden Schräglaufwinkeln beschreiben:

$$\begin{bmatrix} \ddot{y} \\ \ddot{\psi} \end{bmatrix} = \begin{bmatrix} -\frac{c_v+c_h}{mv} & -\frac{c_v l_v - c_h l_h}{mv} + v \\ \frac{c_v l_v - c_h l_h}{J_z v} & -\frac{c_v l_v^2 - c_h l_h^2}{J_z v} \end{bmatrix} \begin{bmatrix} \dot{y} \\ \dot{\psi} \end{bmatrix} + \begin{bmatrix} \frac{c_v}{m} \\ \frac{c_v l_v}{J_z} \end{bmatrix} \delta_{LRW} \ . \tag{3}$$

Gemäß einem vorteilhaften Ausführungsbeispiel verfügt das Verfahren 100 über eine modellprädiktive Querregelung, die eine Serie *N* zukünftiger Lenkradwinkel $\delta_{LRW,soll}$ ausgibt, um das Fahrzeug entlang einer Trajektorie zu stabilisieren:

$$\boldsymbol{\delta_{LRW,soll}} = [\delta_1, \delta_2, ... \delta_N]^T \ .$$

Gemäß einem weiteren Ausführungsbeispiel setzt das Verfahren 100 die Längsregelung und/oder Querregelung mittels einer Pure-Pursuit-Regelung mit variabler Vorausschau und Aktorträgheits-Kompensation um. Deren Verzögerungsglied, optional mit einer Dominatpolkompensation durch einen sogenannten Lag-Kompensator (auch "Lead-Lag-Komensator"), ist bereits aus dem Dokument EP 3 373 095 A1 bekannt, ohne jedoch eine Totzeit in der Übertragungsfunktion zu berücksichtigen.

Das Verfahren 100 weist beispielsweise verschiedene Funktionen zur Schätzung von Längsdynamikparametern und/oder Querdynamikparametern für das verwendete Dynamikmodell unter Nutzung der aktuellen, sowie der gespeicherten Vergangenheitswerte der Soll-Trajektorien und der Ist-Trajektorien zur Laufzeit auf. Sofern die Schätzung im Verfahren 100 an bestimmte Fahrsituationen oder Fahrmanöver gebunden ist - z.B. infolge der aus der Systemtheorie bekannten Beobachtbarkeitskriterien für Zustände bzw. Parameter - weist das Verfahren Funktionen bzw. Eigenschaften auf, die die erforderlichen Fahrmanöver erkennen und beispielsweise in Form von Zustandsmaschinen die Ausführung der Schätzverfahren steuern.

Gemäß einem weiteren vorteilhaften Ausführungsbeispiel, das mit jedem anderen Ausführungsbeispiel kombinierbar ist, verfügen die in Planung und Regelung verwendeten dynamikmodellabhängigen Komponenten über geeignete Schnittstellen zur Änderung von Modellparametern während des Fahrbetriebs (d.h. zur Laufzeit). Die Änderung der Modellparameter wird hierbei automatisch veranlasst.

Gemäß einem weiteren vorteilhaften Ausführungsführungsbeispiel verfügt das Verfahren 100 über eine Initialisierung der Schätzwerte der jeweiligen Parameter mit empirisch und/oder durch Offline-Fitting (Anpassung außerhalb des Fahrtbetriebs) bestimmten Anfangswerten. Ferner umfasst das Verfahren eine Limitierung der Schätzwerte auf physikalisch sinnvolle Wertebereiche (Totzeiten im Sekundenbereich, Masse des Fahrzeugs, welches nicht zu weit von Produktionskennzahlen abweicht, ...). Während der Laufzeit werden Fahrmanöver erkannt und Parameter, beispielsweise kontinuierlich, angepasst.

Zur Bestimmung von Dynamikparametern nutzt die Bestimmungseinheit 206 vorzugsweise die gespeicherten Vergangenheitswerte von Soll-Vorgaben und umgesetzten Ist-Größen. In einer vorteilhaften Ausführung des Verfahrens 100 werden die Ergebnisse direkt zur Laufzeit berechnet. Eine weitere Ausführung des Verfahrens 100 führt die Berechnung unter Nutzung von Aufzeichnungen geeigneter Messfahrten offline, beispielsweise während einer Wartung oder beim Stand im Fuhrpark, aus. Die Ergebnisse können beispielsweise in Form von Kennfeldern oder durch offline trainierte künstliche neuronale Netze (Netzwerke) zur Laufzeit zur Ermittlung der jeweiligen Schätzgröße bestimmt werden.

In einer vorteilhaften Ausführung des Verfahrens 100 werden künstliche neuronale Netze zur Bestimmung von Aktortotzeiten anhand der Abweichung zwischen Soll-Vorgabe und Umsetzung der Anforderung, z.B. einer Beschleunigung oder eines Motormoments bzw. Bremsdrucks, genutzt. Dabei können in einer Variante des Verfahrens einzelne Vergangenheitswerte einer oder mehrerer Stell- oder Zustandsgrößen oder Sequenzen mehrerer Vergangenheitswerte genutzt werden.

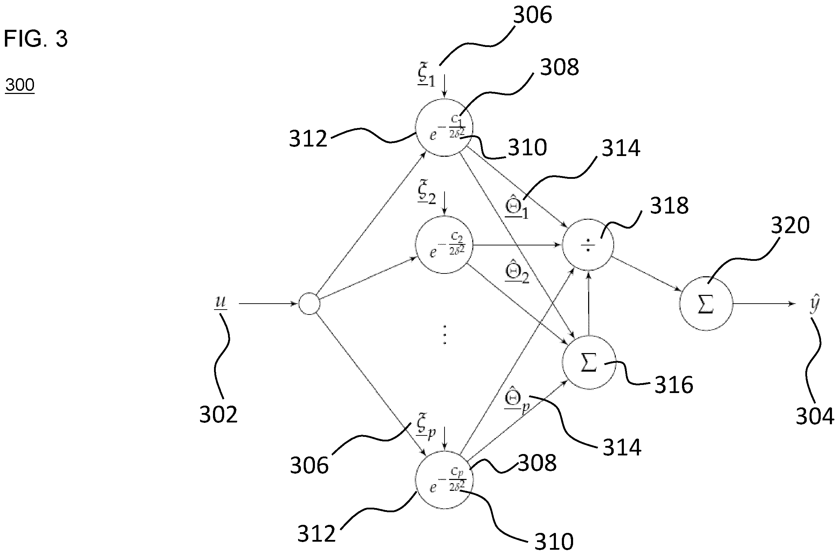

Figur 3 zeigt ein exemplarisches künstliches neuronales Netz 300, welches als sogenanntes "General Regression Neural Network" (GRNN), das zur Klasse der Radialbasis-neuronalen Netzwerke gehört, ausgebildet ist und eine Schicht aus *p* Neuronen umfasst. Das GRNN 300 umfasst ferner in einem *N*-dimensionalen Vektor angeordnete Eingangswerte $\underline{u}$ 302 und eine Ausgangsgröße $\hat{y}(\underline{u})$ 304. Das GRNN 300 verwendet vorteilhafterweise Gauß'sche Kurven, die zur Klasse der Radial-Basisfunktionen (RBFen) gehören, als Aktivierungsfunktionen $A_i$ 312 mit Schwerpunkten der Basisfunktionen bzw. Aktivierungsparametern $\widetilde{\varsigma_i}$ 306, wobei *i*=1..p die Neuronen indiziert. Entsprechend der Zahl der Neuronen wird der Eingangsraum $\underline{u} \in \boldsymbol{R^N}$ gleichmäßig aufgeteilt. Der quadratische euklidische Abstand $C_i$ 308 zwischen Eingangsgröße $u_k$ 302 mit *k*=1,..,N und dem Schwerpunkt der Radialbasisfunktion $\widetilde{\varsigma_{i,k}}$ 306 berechnet sich aus

$$C_i = \sum_{k=1}^{N}(u_k - \widetilde{\varsigma_{i,k}})^2$$

. Die Eingangsgrößen 302 können auch als "training sample" oder "input" bezeichnet werden. Die Ausgangsgröße 304 kann auch als "output" bezeichnet werden.

Die Standardabweichung $\delta$ 310 definiert die Breite der Aktivierungsfunktionen $A_i$ 312. In einem herkömmlichen Radialbasis-Netzwerk sind die Aktivierungsfunktionen 312 definiert als $A_i = \dfrac{\exp\left(-\frac{c_i}{2\delta^2}\right)}{}$ . Ein GRNN 300 zeichnet sich

$$A_i = \frac{\exp\left(-\frac{c_i}{2\delta^2}\right)}{\sum_{j=1}^{p}\exp\left(-\frac{c_j}{2\delta^2}\right)}$$

dadurch aus, dass die Aktivierungsfunktionen normiert sind, . Demnach wird ein Neuron mit Aktivierungsfunktion $A_i$ 312 umso stärker aktiviert, je näher der Eingangswert $u_k$ 302 sich am jeweiligen Stützwert bzw. Aktivierungsparameter 306 der RBF befindet. Der Ausgang des Netzes wird durch eine mit den Parametern $\hat{\Theta}_i$ 314 gewichtete Summe aller Aktivierungen bestimmt.

Das GRNN 300 kann zunächst in einem Schritt die gewichtete Summe 316 der nicht-normierten Aktivierungsfunktionen, $A_i = \exp\left(-\frac{c_i}{2\delta^2}\right)$ , 312 bilden und in einem nachfolgenden Schritt 318 durch den gemeinsamen Normierungsfaktor teilen, um die Summe 320 der normierten Aktivierungsfunktionen zu erhalten. Alternativ können zunächst

$$A_i = \frac{\exp\left(-\frac{c_i}{2\delta^2}\right)}{\sum_{j=1}^{p}\exp\left(-\frac{c_j}{2\delta^2}\right)}$$

die Aktivierungsfunktionen 312 im Schritt 318 normiert werden, , und im darauffolgenden Schritt 320 die Summe der normierten Aktivierungsfunktionen gebildet werden.

Die Berechnung der Ausgangsgröße 304 durch das neuronale Netz 300 kann offline oder online erfolgen. Online bedeutet hier zunächst, dass das Verfahren während der Fahrt durchgeführt wird. Zusätzlich kann das Fahrzeug während der Fahrt mit einer externen Recheneinheit, beispielsweise einem Supercomputer, ständig in Funkkontakt stehen und die Berechnung außerhalb des Fahrzeugs erfolgen.

Werden die Aktivierungsfunktionen 312 aller neuronalen Netze zu einem Vektor $\underline{A}$ und die Gewichte 314 zu einem Vektor $\hat{\underline{\Theta}}$ zusammengefasst, ergibt sich folgende Vorschrift zur Bestimmung des Fehlers $e$ zwischen prädiziertem und gemessenem Schätzwert:

$$e(\underline{u}) = \hat{y}(\underline{u}) - y(\underline{u}) = \hat{\underline{\Theta}}^T \underline{A}(\underline{u}) - \underline{\Theta}^T \underline{A}(\underline{u}) \quad,$$

wobei $\Theta$ der Vektor der idealen Gewichte ist, $\hat{\Theta}$ der Vektor der angepassten Gewichte 314 aufgrund von Trainingsdaten, $\hat{y}(\underline{u})$ die vom neuronalen Netz, beispielsweise dem GRNN 300, berechnete Ausgangsgröße 304 und $y(\underline{u})$ die tatsächliche Ausgangsgröße des Systems.

Das Training des Netzes erfolgt zur Laufzeit, beispielsweise während des Fahrbetriebs, mittels eines Adaptionsverfahrens, bei dem die Werte $\hat{\Theta}_i$ 314 zur Laufzeit mittels gespeicherter Soll-Werte und gespeicherter Ist-Werte für Zustände und/oder Stellgrößen so verändert werden, dass der Fehler $e(\underline{u})$ minimiert wird.

Hierbei kommt ein herkömmliches iteratives Gradientenabstiegsverfahren mit einem sogenannten "Momentum-Term" $\Delta\hat{\underline{\Theta}}[l]$, d.h. dem Differenzbetrag zur Optimierung im $l$-ten Iterationsschritt, zum Einsatz:

$$\hat{\underline{\Theta}}[l+1] = \hat{\underline{\Theta}}[l] + \Delta\hat{\underline{\Theta}}[l] \,.$$

Der "Momentum-Term" kann beispielsweise bestimmt werden aus dem Produkt von Fehler und Vektor der Aktivierungsfunktionen mit einem Iterationsschritte-Weite-Faktor $\eta$ und einem Parameter $0 \le \alpha < 1$ und dem "Momentum-Term" $\Delta\hat{\underline{\Theta}}[l-1]$ des vorhergehenden, ($l$-1)-ten, Iterationsschritts:

$$\Delta\hat{\underline{\Theta}}[l] = -\eta\, e(\underline{u})[l]\, \underline{A}(\underline{u})[l] + \alpha\, \Delta\hat{\underline{\Theta}}[l-1].$$

Im Folgenden wird ein Ausführungsbeispiel der Bestimmung der Totzeit der Querdynamik eines Nutzfahrzeugs beschrieben. Als Totzeit innerhalb der Querdynamik wird die Zeitspanne $T_{T,\delta}$ (die auch mit $T_T$ oder $\tau_\delta$ bezeichnet werden kann) verstanden, die zwischen dem Zeitpunkt der Anforderung eines Lenkwinkels und dessen aktorseitiger Umsetzung vergeht.

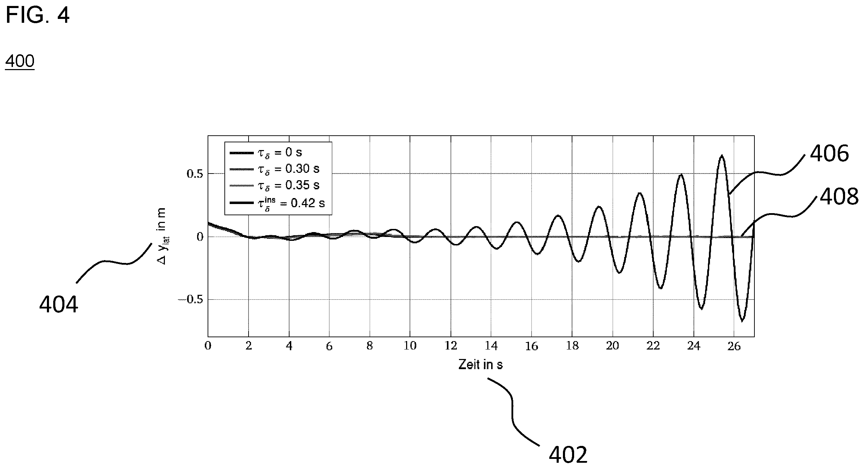

Figur 4 zeigt schematisch eine Beziehung 400 zwischen dem zeitlichen Verlauf 402 und der Abweichung der Querkoordinate 404 oder eines Lenkwinkels von einer Soll-Trajektorie. Die stark oszillierende Kurve 406 entspricht einer großen Totzeit von 0.42s. Die flache Kurve 408 entspricht einer kürzeren Totzeit von 0.35s. Totzeiten, die kürzer sind als 0.35s weichen nur in den ersten zwei Sekunden geringfügig von der flachen Kurve einer Totzeit von 0.35s ab. Ein geregeltes System neigt mit zunehmender Totzeit zu Instabilität.

Zur Schätzung der im System auftretenden Totzeit werden bis zu einem parametrierbaren Zeitpunkt $T_d$ Vergangenheitswerte der geforderten Lenkwinkel $\delta_{soll,k}$ und der tatsächlich umgesetzten Lenkwinkel $\delta_{ist,k}$ gespeichert:

$$\boldsymbol{\delta_{soll}} = \left[\delta_{soll,1}, \delta_{soll,2}, ..., \delta_{soll,T_d}\right]^T, \quad \boldsymbol{\delta_{ist}} = \left[\delta_{ist,1}, \delta_{ist,2}, ..., \delta_{ist,T_d}\right]^T \quad .$$

Darin definiert $T_d$ den Maximalwert des Schätzwerts für die Totzeit $T_{T,\delta}$

In einem vorteilhaften Ausführungsbeispiel des Verfahrens wird ein Vorverarbeitungsschritt eingeführt, bei dem für die angeforderte Stellgröße $\delta_{soll,Td}$ die Stellgröße innerhalb $\boldsymbol{\delta_{ist}}$ mit der geringsten Differenz zu $\delta_{soll,Td}$ bestimmt wird:

$$\Delta\delta_{min} = min|(\boldsymbol{\delta_{ist}} - \delta_{soll,T_d})| \text{ oder } \Delta\delta_{min} = min_k|(\delta_{ist,k} - \delta_{soll,T_d})|.$$

Mit $\Delta\delta_{min}$ liegt auch der zugehörige Index $k$ in $\delta_{\textbf{ist}}$ vor, womit sich anhand des (zu dem Index $k$ gehörigen) Zeitstempels ein Wert $T_{T,\delta}$ für die vorliegende Totzeit bestimmen lässt. Diese so bestimmte Totzeit wird im GRNN abgelegt. Der Eingangsraum des GRNN hat die Dimension 2 und wird durch den geforderten Lenkwinkel (oder Lenkradwinkel) $\delta_{soll,Td}$ und die geforderte Lenkwinkeländerungsrate (oder Lenkradwinkeländerungsrate) $\dot{\delta}_{soll,Td}$ aufgespannt. Jede Dimension des Eingangsraums wird innerhalb eines vorgegebenen Betriebsbereichs in jeweils $p$ (z.B. $p=21$) Stützstellen aufgeteilt, wodurch das GRNN insgesamt $p^2$, (z.B. $p^2=441$) Neuronen aufweist.

Die Freigabefunktion für die Schätzung schließt den Betrieb bei zu geringen Geschwindigkeiten, bei Unstetigkeiten im Lenkverlauf sowie bei zu hohen Lenkwinkeln und Lenkwinkeländerungsraten sowie in Abhängigkeit der Vorzeichenwechsel in ($\delta_{\textbf{ist}}$ - $\delta_{soll,Td}$) aus.

Ein weiteres Ausführungsbeispiel des Verfahrens nutzt die GRNN Struktur, um die Zeitkonstante einer als PT1-Glied definierten Aktorfunktion zu schätzen. Dabei wird eine Datenbank mit unterschiedlich modellierten PT1-Gliedern mit dem Sollwertsignalvektor beaufschlagt. Die hinterlegte PT1-Funktion mit der geringsten Abweichung zum gemessenen Ist-Verlauf gibt dann den Schätzwert der Zeitkonstante vor.

Eine weitere Variante des Verfahrens nutzt Sequenzen aufgezeichneter Vergangenheitswerte, die länger als die geschätzte Totzeit sind, $T_d \gg T_{T,\delta}$ wobei die Eingangsvektoren vorteilhafterweise in einem Vorverarbeitungsschritt in Bereiche, in denen die in der Übertragungsfunktion enthaltenen Parameter besonders gut beobachtbar sind, unterteilt werden. Der Bereich eines Schaltvorgangs ist beispielsweise ungeeignet, da während des Schaltvorgangs die Totzeit ins Unendliche steigt. Anschließend wird der untersuchte Gesamtbereich sowie die einzelnen Parametern zugehörigen Teilbereiche in diskrete Stützstellen unterteilt. Jeweils einem dieser Sampling-Vektoren bzw. Eingangsvektoren zugeordnete Netze, beispielsweise GRNNs, können entweder online trainiert werden, indem - wie für Totzeit und PT1-Zeitkonstante beschrieben - Referenzmodelle zum Einsatz kommen, oder in einer weiteren Variante des Verfahrens offline mittels komplexerer Referenzmodelle und Durchführung bestimmter Referenzmanöver, wie etwa Sprungvorgabe von Soll-Lenkwinkeln, trainiert und im Modell hinterlegt werden. Die Rechenzeit kann hierdurch offline ansteigen. Online wird die Rechenzeit verkürzt.

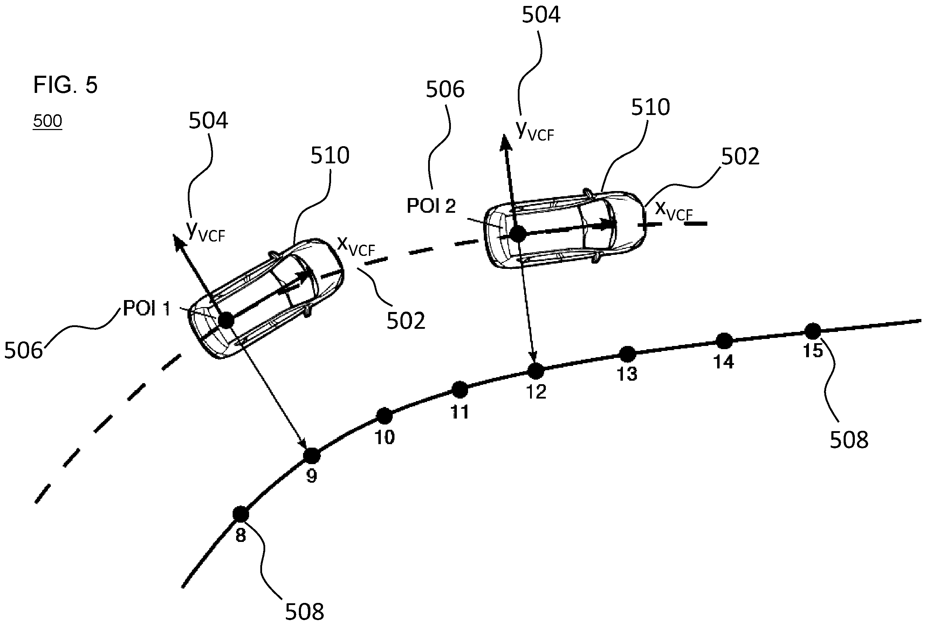

Gemäß einem Ausführungsbeispiel verfügt die Regelung über einen Pure-Pursuit-Regler, der entlang einer gegebenen Referenztrajektorie $\boldsymbol{X_{soll}}$ = $[x_{soll}, y_{soll}, ... ]^T$ in Abhängigkeit der Geschwindigkeit eine definierte Soll-Vorausschau $\Delta x$ (Differenz von aktueller Position auf der Ist-Trajektorie und Punkt der Vorausschau bzw. Referenztrajektorie) bestimmt, die wiederum in eine Soll-Krümmung und Soll-Gierrate überführt wird, durch die das Fahrzeug an einem (insbesondere vorgegebenen) Punkt $x_v$ (beispielsweise der Längskoordinate) den gewünschten (Soll-) Wert $y_v$ (beispielsweise der Querkoordinate) erreicht. Mit $x_{soll}, y_{soll}$ werden insbesondere die fahrzeugeigene Längskoordinate 502 und die fahrzeugeigene Querkoordinate 504 in Figur 5 bezeichnet. Die Totzeit des Aktors kann berücksichtigt und/oder kompensiert werden, indem für die Vorausschau folgender Ansatz gewählt wird:

$$x_v = v \cdot (t_v + T_{T,\delta}).$$

$t_v$ bezeichnet den Zeitpunkt, zu dem der (insbesondere vorgegebene) Punkt $x_v$ der Längskoordinaten (von der Hinterachse) bei einer (insbesondere Längs-) Geschwindigkeit $v$ des Fahrzeugs erreicht wird.

Gemäß einem weiteren Ausführungsbeispiel, welches mit jedem anderen Ausführungsbeispiel kombinierbar ist, weist das Verfahren 100 eine Kompensations-Übertragungsfunktion der nachfolgenden Form auf, deren Übertragungsnullstelle $T_{A,\delta}$ den Übertragungspol der Aktor-Übertragungsfunktion, $G_A(s)$, kompensiert:

$$G_K(s) = \frac{\delta_{R,k}(s)}{\delta_R(s)} = \frac{T_k s + 1}{\left(T_{A,\delta} s + 1\right)^2}$$

Durch die Kompensations-Übertragungsfunktion kann beispielsweise die Trägheit der Aktorik der Querführung im Dynamikmodell berücksichtigt werden. Die Kompensations-Übertragungsfunktion kann auch als Lag-Kompensation oder als Lead-Lag-Kompensation bezeichnet werden.

In einem weiteren Ausführungsbeispiel werden die Kompensation der Totzeit, beispielsweise bei einer Pure-Pursuit-Regelung, und die Einführung einer Kompensations-Übertragungsfunktion kombiniert.

Gemäß einem weiteren Ausführungsbeispiel ist die Regelung, insbesondere der Querführung, mittels eines modellprädiktiven Ansatzes implementiert und gibt für die jeweils nachfolgenden $p$ Zeitschritte Soll-Lenkwinkel $\delta_{soll} = [\delta_{soll,1}, ... \delta_{soll,p}]$ vor. Würde nun entsprechend der geschätzten Totzeit ein entsprechend zeitlich vorausliegender Lenkwinkel $\delta_{TT\delta}$ mit $t_{TT\delta} = T_{T,\delta}$ an die Aktorik übergeben (d.h. die Totzeit bestimmt den Zeitpunkt der Vorgabe), so blieben damit die Lenkanforderungen $[\delta_1, ... \delta_{TT\delta1}]$ unberücksichtigt. Da diese beim modellprädiktiven Ansatz jedoch häufig den hauptsächlichen Stellaufwand zur Überführung des Fahrzeugs auf die Soll-Trajektorie beinhalten, wäre dieser Ansatz mit erheblichem Einbußen im Konvergenzverhalten der Regelung verbunden. Ein dementsprechend besserer Ansatz besteht darin, den modellprädiktiven (insbesondere Quer-) Regler dahingehend zu erweitern, dass entsprechend der geschätzten Totzeit die vom Aktor noch nicht umgesetzten Stellgrößen $[\delta_1, ... \delta_{TT\delta1}]$ gespeichert werden. Hierfür ist der Speicherbedarf minimal. Bevor der Regler im nächsten Zeitschritt aufgerufen wird, wird der vom Regler verwendete Fahrzeugzustand, insbesondere die Lokalisierung mittels modellgestützter Vorwärtsintegration, korrigiert.

Figur 5 zeigt ein Beispiel einer modelprädiktiven Regelung 500. Ein Fahrzeug 510 mit fahrzeugeigener Längskoordinate 502 und fahrzeugeigener Querkoordinate 504 ("Vehicle Coordinate System Fixed" bzw. "VCF") ist an zwei Punkten 506 ("Point of Interest" bzw. "POI") gezeigt. Beispielsweise wird die räumliche Position des "POI 1" zu einem früheren Zeitpunkt erreicht als die räumliche Position des "POI 2". Der Ursprung des fahrzeugeigenen Koordinatensystems liegt mittig auf der Hinterachse des Fahrzeugs. Dem "POI 1" ist der Index 9 auf einer Referenz-Trajektorie bzw. Soll-Trajektorie 508 zugeordnet. Dem "POI 2" ist der Index 12 auf der Referenz-Trajektorie bzw. Soll-Trajektorie 508 zugeordnet. Die modellprädiktive Regelung 500 kann beispielsweise den dem "POI 2" geordneten Soll-Wert durch Vorwärtsintegration von dem Zeitschritt, an dem der "POI 1" erreicht wird, berechnen.

Gemäß einem weiteren Ausführungsbeispiel, das mit allen anderen Ausführungsbeispielen kombinierbar ist, kann mittels eines künstlichen neuronalen Netzes, insbesondere des GRNN 300, der "virtuelle" Radstand des kinematischen Einspurmodells geschätzt werden. Der Radstand wird als "virtuell" bezeichnet, da bei seiner Schätzung neben Effekten der Variation des tatsächlichen Radstands auch weitere, sonst nicht berücksichtigte Effekte, wie etwa Schräglaufsteifigkeiten berücksichtigt werden. Analog zum Verfahren zur Bestimmung der Totzeit der Querführung und/oder der Längsführung werden Vergangenheitswerte relevanter Größen analysiert. Die relevanten Größen zur Schätzung des "virtuellen" Radstands umfassen Vektoren der Querbeschleunigung $a_y$ und des tatsächlichen Lenkradwinkels $\delta_{LRW,ist}$. In einem anschließenden Verarbeitungsschritt wird anhand der Differentialgleichungen (2) des kinematischen Einspurmodells ein Schätzwert des "virtuellen" Radstands $l$ ermittelt, der in das GRNN 300 eingespeist wird.

Gemäß einem Ausführungsbeispiel stellen die Querbeschleunigung und der Lenkradwinkel die zwei Dimensionen des Eingangsraums, beispielsweise des GRNN 300, dar und werden, vorzugsweise innerhalb sinnvoller Wertebereiche, in jeweils $p$ (beispielsweise $p$=21) Stützstellen diskretisiert. Zur Laufzeit werden die Wichtungen der resultierenden $p^2$ (beispielsweise $p^2$=441) Neuronen angepasst, um den Fehler zwischen Messung und Vorhersage zu minimieren.

Gemäß einem weiteren Ausführungsbeispiel wird eine Netzstruktur mit eindimensionalem Eingangsraum, insbesondere dem Betrag der Querbeschleunigung, gewählt. Dieser wird vorzugsweise innerhalb eines sinnvollen Wertebereichs, beispielsweise einer Beschleunigung von 0m/s$^2$ bis 3m/s$^2$, in $p$ (beispielsweise $p$ =21) Stützpunkte aufgeteilt. Die Wichtungen werden zur Laufzeit angepasst, um den Fehler zwischen vorausberechnetem bzw. prädiziertem und gemessenem lateralen Positionsfehler zu minimieren.

Eine Teilfunktion des Verfahrens stellt sicher, dass nur solche Daten zum Training der Netze genutzt werden, die in Fahrsituationen erhoben wurden, innerhalb derer gemäß geeigneter systemtheoretischer Kriterien eine Beobachtbarkeit des Radstands bezüglich der Querbeschleunigung gegeben ist. Weiterhin wird der geschätzte Radstand auf geeignete Minimal- und Maximalwerte limitiert.

Weitere Ausführungsbeispiele des Verfahrens 100 berücksichtigen zusätzlich zur Querbeschleunigung und zum Lenkwinkel weitere Zustandsgrößen, wie beispielsweise die Gierrate und/oder Krümmung, beispielsweise der Trajektorie des Fahrzeugs.

Ein vorteilhaftes Ausführungsbeispiel des Verfahrens zur Bestimmung des virtuellen Radstands umfasst die Nutzung längerer Sequenzen aufgezeichneter Vergangenheitswerte. Der untersuchte Gesamtbereich wird in diskrete Stützstellen unterteilt. Jeder diskreten Stützstelle wird ein Sampling-Vektor oder Eingangsvektor zugeordnet. Das dem Eingangsvektor zugeordnete Netz kann online trainiert werden, indem unterschiedlich parametrierte, beispielsweise durch die Differentialgleichungen (2) des kinematischen Einspurmodells charakterisierte, Referenzmodelle zum Einsatz kommen. Alternativ oder ergänzend kann das Verfahren zur Bestimmung des virtuellen Radstands offline mittels komplexerer Referenzmodelle als das kinematische Einspurmodell und unter Durchführung vorbestimmter Referenzmanöver, beispielsweise einer Sprungvorgabe von Soll-Lenkwinkeln, trainiert und im Dynamikmodell hinterlegt werden.

Gemäß einem Ausführungsbeispiel des Verfahrens, bei der ein modellprädiktives Querregelungsverfahren zum Einsatz kommt, wird der Schätzwert des virtuellen Radstands direkt in dessen Dynamikmodell eingespeist.

Im Folgenden werden Ausführungsbeispiele der Bestimmung und Kompensation der Totzeit der Längsdynamik beschrieben. Hierin kann als Totzeit innerhalb der Längsdynamik die Zeitspanne $T_{T,a}$ (Totzeit der Aktorik) verstanden werden, die zwischen dem Zeitpunkt der Anforderung einer Soll-Beschleunigung und deren aktorseitiger Umsetzung vergeht.

Zur Schätzung der im System auftretenden Totzeit werden bis zu einem parametrierbaren Zeitpunkt $T_d$ Vergangenheitswerte der geforderten Soll-Beschleunigung, die auch als angeforderte Stellgröße bezeichnet werden kann, und der tatsächlich umgesetzten Ist-Beschleunigung, die auch als umgesetzte Stellgröße bezeichnet werden kann, gespeichert:

$$\boldsymbol{a_{soll}} = \begin{bmatrix} a_{soll,1}, \dots a_{soll,T_d} \end{bmatrix}^T, \quad \boldsymbol{a_{ist}} = \begin{bmatrix} a_{ist,1}, \dots, a_{ist,T_d} \end{bmatrix}^T \quad .$$

$T_d$ bezeichnet den Maximalwert des Schätzwerts für die Totzeit $T_{T,a}$.

Gemäß einem Ausführungsbeispiel des Verfahrens zur Bestimmung und Kompensation der Totzeit der Längsführung wird ein Vorverarbeitungsschritt eingeführt, bei dem für die angeforderte Stellgröße $a_{soll,Td}$ die Stellgröße innerhalb $\boldsymbol{a_{ist}}$ mit der geringsten Differenz zu $a_{soll,Td}$ bestimmt wird:

$$\Delta a_{min} = min|(\boldsymbol{a_{ist}} - a_{soll,T_d})| \text{ oder } \Delta a_{min} = min_k \left| a_{ist,k} - a_{soll,T_d} \right|.$$

$k$=1..$T_d$ bezeichnet hierbei den Index innerhalb der Serie von Ist-Beschleunigungen und/oder Soll-Beschleunigungen.

Mit $\Delta a_{min}$ liegt der zugehörige Index $k$ in $\boldsymbol{a_{ist}}$ vor, womit sich anhand des Zeitstempels zum Index $k$ ein Wert $T_{T,a}$ für die Totzeit der Längsführung bestimmen lässt. Diese so bestimmte Totzeit der Längsführung wird im GRNN abgelegt. Der Eingangsraum des GRNN hat die Dimension N = 2 und wird durch die geforderte Sollbeschleunigung $a_{soll,Td}$ und die Geschwindigkeit $v$ aufgespannt. Jede Dimension des Eingangsraums wird innerhalb eines vorgegebenen Betriebsbereichs in jeweils $p$ (beispielsweise $p$=21) Stützstellen aufgeteilt, wodurch das GRNN insgesamt $p^2$ (beispielsweise $p^2$=441) Neuronen aufweist.

Gemäß einem vorteilhaften Ausführungsbeispiel der Bestimmung und Kompensation der Totzeit der Längsführung werden die Totzeiten für unterschiedliche Betriebszustände, insbesondere einen Motorbetrieb und einen Bremsbetrieb, unabhängig voneinander durch jeweils ein künstliches neuronales Netz, beispielsweise das GRNN 300, bestimmt.

Die Aktoren der unterschiedlichen Betriebszustände weisen im Allgemeinen unterschiedliche Dynamiken auf. Vorzugsweise schließt die Freigabefunktion für die Schätzung(en) der Totzeit(en) der Längsführung den Betrieb bei zu geringen Beschleunigungsgradienten und/oder im Stillstand, sowie bei Unstetigkeiten im Beschleunigungsverlauf wie beispielsweise bei Schaltvorgängen aus.

Gemäß einem weiteren Ausführungsbeispiel zur Bestimmung und Kompensation der Totzeit der Längsdynamik wird die Zeitkonstante einer als PT1-Glied definierten Aktorfunktion in der Übertragungsfunktion (1) geschätzt. Eine Datenbank mit unterschiedlich modellierten PT1-Gliedern wird mit dem Sollwertsignalvektor beaufschlagt. Die hinterlegte PT1-Aktorfunktion mit der geringsten Abweichung zum gemessenen Ist-Verlauf gibt den Schätzwert der Zeitkonstanten des PT1-Glieds vor.

Gemäß einem weiteren Ausführungsbeispiel des Verfahrens 100 zur Bestimmung und Kompensation der Totzeit der Längsdynamik nutzt das Verfahren 100 längere Sequenzen aufgezeichneter Vergangenheitswerte als die geschätzte Totzeit, $T_d$ » $T_{T,a}$, wobei die Eingangsvektoren vorteilhafterweise in einem Vorverarbeitungsschritt in Bereiche, in denen die in der Übertragungsfunktion, beispielsweise gemäß Gleichung (1), enthaltenen Parameter besonders gut beobachtbar sind, unterteilt werden. Anschließend wird der untersuchte Gesamtbereich sowie die einzelnen Parametern zugehörigen Teilbereiche in diskrete Stützstellen unterteilt. Jeweils einem der Sampling-Vektoren oder der Eingangsvektoren zugeordnete Netze können online trainiert werden, indem - wie für die Totzeit und die PT1-Zeitkonstante beschrieben - Referenzmodelle zum Einsatz kommen. Alternativ oder ergänzend kann das Verfahren offline mittels komplexerer Referenzmodelle und Durchführung bestimmter Referenzmanöver, wie etwa einer Sprungvorgabe von Soll-Beschleunigungen, trainiert und im Modell hinterlegt werden.

Gemäß einem Ausführungsbeispiel der Bestimmung und Kompensation der Totzeiten der Längsdynamik verfügt die Regelung über einen PID-Regler, der entlang einer gegebenen Referenztrajektorie $\boldsymbol{X}$ = [$x, v, \dots$ ]$^T$ in Abhängigkeit der Geschwindigkeit $v$ eine definierte Soll-Vorausschau $\Delta x$ (Differenz von aktueller Position auf der Ist-Trajektorie und Punkt der Vorausschau bzw. Referenztrajektorie) bestimmt, die wiederum in eine Soll-Beschleunigung überführt wird, durch die das Fahrzeug am Punkt $x_v$ den gewünschten Wert $v_v$ der Geschwindigkeit erreicht. Die Totzeit des Aktors, beispielsweise der Längsführung, kann berücksichtigt werden, indem für die Vorausschau folgender Ansatz gewählt wird:

$$x_v = v \cdot (t_v + T_{T,a}).$$

Gemäß einem weiteren Ausführungsbeispiel, das mit jedem anderen Ausführungsbeispiel kombinierbar ist, umfasst die Übertragungsfunktion, beispielsweise gemäß Gleichung (1), eine Kompensations-Übertragungsfunktion der nachfolgenden Form auf, deren Übertragungsnullstelle $T_k$ den Übertragungspol der Aktor-Übertragungsfunktion kompensiert:

$$G_K(s) = \frac{a_{R,k}(s)}{a_R(s)} = \frac{T_k s + 1}{\left(T_{A,a} s + 1\right)^2}$$

Durch die Kompensations-Übertragungsfunktion kann beispielsweise die Trägheit der Aktorik der Längsdynamik im Dynamikmodell berücksichtigt werden. Die Kompensations-Übertragungsfunktion kann auch als Lag-Kompensation oder Lead Lag-Kompensation bezeichnet werden.

In einem weiteren Ausführungsbeispiel werden ein PID-Regler und eine Kompensations-Übertragungsfunktion kombiniert.

Gemäß einem weiteren, mit allen vorstehenden Ausführungsbeispielen kombinierbaren, Ausführungsbeispiel der Bestimmung und Kompensation der Totzeiten der Längsführung ist die Regelung mittels eines modellprädiktiven Ansatzes implementiert und gibt für die jeweils nachfolgenden $p$ Zeitschritte Soll-Beschleunigungen $a_{soll} = [a_{soll,1}, \ldots a_{soll,p}]$ vor. In Analogie zur Bestimmung und Kompensation der Totzeit der Querführung besteht die Kompensationsfunktion der Längsdynamik darin, den modellprädiktiven Regler dahingehend zu erweitern, dass entsprechend der geschätzten Totzeit, insbesondere der Längsdynamik, die vom Aktor noch nicht umgesetzten Stellgrößen bzw. Sollgrößen $[a_{soll,1}, \ldots a_{soll,TTa-1}]$ gespeichert werden. TTa bezeichnet hierbei die Vorgabe, die aufgrund der Totzeitkompensation der Längsdynamik ausgewählt wurde. Bevor der Regler im nächsten Zeitschritt aufgerufen wird, wird dementsprechend der von diesem verwendete Fahrzeugzustand, insbesondere die Lokalisierung mittels modellgestützter Vorwärtsintegration, korrigiert.

Ausführungsbeispiele umfassen eine Vorrichtung und ein von der Vorrichtung ausgeführtes Verfahren, bei dem auf Grundlage von zur Laufzeit gespeicherten Informationen mit Hilfe geeigneter Verfahren nicht berücksichtigte Dynamikeffekte in Form geeigneter Parameter ermittelt und dem Planungsalgorithmus und/oder der Regelung zur Verfügung gestellt werden. Durch die Ermittlung geeigneter Parameter im Dynamikmodell der Querführung und/oder der Längsführung wird eine signifikante Verbesserung der Regelgenauigkeit bei der Trajektorienfolge erreicht. Alternativ oder ergänzend stellt die vorliegende Erfindung eine Vorrichtung und ein Verfahren bereit zur Schätzung von Nichtlinearitäten in der Dynamik eines Fahrzeugs zur Adaption von Bewegungsplanungsalgorithmen und Folgeregelungsalgorithmen für ein mindestens teilweise automatisiertes Fahrzeug. Die vorliegende Erfindung optimiert das Führungsverhalten der Folgeregelung.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Fahrsituation oder einen bestimmten Einsatzzweck an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

100     Verfahren
102     Erfassung eines Ist-Werts
104     Speicherung des Ist-Werts
106     Bestimmung einer Totzeit eines Aktors
108     Regelung der Totzeit des Aktors
200     Vorrichtung
202     Sensor / Sensorschnittstelle
204     Speichereinheit
206     Bestimmungseinheit

208    Regelungseinheit

300    Künstliches Neuronales Netzwerk

302    Eingangsgröße $\hat{\underline{u}}$

304    Ausgangswert $\hat{\underline{y}}$

306    Aktivierungsparameter $\tilde{\varsigma}$

308    Quadratischer euklidischer Abstand zwischen Eingangsgröße und Schwerpunkt der Radialbasisfunktion $C_i$

310    Breite der Aktivierungsfunktion $\delta$

312    Aktivierungsfunktion $A_i$

314    Gewichtungsfaktor $\hat{\underline{\Theta}}$

316    Gewichtete Summation $\Sigma$

318    Normierung $\div$

320    Gewichtete und normierte Summation $\Sigma$

400    Abweichung der Querkoordinate als Funktion der Zeit

402    Zeitachse

404    Laterale Achse

406    Abweichung der Querkoordinate für eine Totzeit von 0.42s

408    Abweichung der Querkoordinate für eine Totzeit von 0.35s

500    Modellprädikative Regelung

502    Längskoordinate

504    Querkoordinate

506    Punkt auf der Ist-Trajektorie

508    Punkt auf der Soll-Trajektorie

510    Fahrzeug

**Patentansprüche**

1. Vorrichtung (200) zur Bestimmung und Kompensation einer Totzeit mindestens eines Aktors zur Querführung und/oder Längsführung eines Kraftfahrzeugs, insbesondere eines Nutzfahrzeugs, umfassend:

   - mindestens einen Sensor (202) oder mindestens eine Sensorschnittstelle zur Erfassung mindestens eines Ist-Werts eines Bewegungszustands der Querführung und/oder Längsführung;
   - eine Bestimmungseinheit (206), die dazu ausgebildet ist, die Totzeit des mindestens einen Aktors durch Vergleichen mindestens eines aus einem Dynamikmodell der Querführung und/oder Längsführung des Kraftfahrzeugs berechneten Soll-Werts des Bewegungszustands mit dem erfassten mindestens einen Ist-Wert zu bestimmen; und
   - eine Regelungseinheit (208), die dazu ausgebildet ist, abhängig vom erfassten mindestens einen Ist-Wert des Bewegungszustands und der bestimmten Totzeit des mindestens einen Aktors den mindestens einen Aktor zu regeln, wobei die Regelungseinheit (208) um die Totzeit zeitlich vorauslaufende Steuersignale an den mindestens einen Aktor ausgibt.

2. Vorrichtung nach Anspruch 1, ferner umfassend:

   - eine Speichereinheit (204), die dazu ausgebildet ist, den erfassten mindestens einen Ist-Wert zu speichern und an die Bestimmungseinheit (206) auszugeben.

3. Vorrichtung nach Anspruch 1 oder 2, wobei der mindestens eine Sensor (202) oder die mindestens eine Sensorschnittstelle ein Empfangsmodul zum Empfangen von Signalen eines globalen Navigationssatellitensystems umfasst, vorzugsweise einschließlich von differenziellen Korrektursignalen.

4. Vorrichtung nach einem der Ansprüche 1 bis 3, wobei das Dynamikmodell ein kinematisches Einspurmodell umfasst und der Bewegungszustand einen Lenkwinkel eines Rads und einen Betrag der Geschwindigkeit des Kraftfahrzeugs umfasst, wobei optional die Bestimmungseinheit dazu ausgebildet ist, einen Wert eines virtuellen Radstands des kinematischen Einspurmodells zu schätzen und die Regelungseinheit den mindestens einen Aktor abhängig vom geschätzten virtuellen Radstand regelt, wobei optional die Bestimmungseinheit ein Künstliches Neuronales Netzwerk (300) zur Schätzung des virtuellen Radstands umfasst, dessen Eingangsraum (302) eine Querbeschleunigung, einen Lenkradwinkel, eine Gierrate und/oder eine Krümmung der Trajektorie des Kraftfahrzeugs umfasst.

5. Vorrichtung nach einem der Ansprüche 1 bis 4, wobei das Dynamikmodell Schräglaufsteifigkeiten an Vorder- und Hinterachse, Schwerpunktabstände von Vorder- und Hinterachse, eine Masse des Kraftfahrzeugs und/oder ein Trägheitsmoment um eine Hochachse des Kraftfahrzeugs als Parameter umfasst.

6. Vorrichtung nach einem der Ansprüche 1 bis 5, wobei die Bestimmungseinheit (206) und/oder die Regelungseinheit (208) ferner dazu ausgebildet ist, eine zeitliche Serie von N zukünftigen Soll-Werten des Bewegungszustands, insbesondere Soll-Werten des Lenkwinkels und/oder der Beschleunigung, mittels des Dynamikmodells vorauszuberechnen, wobei N eine natürliche Zahl ist, und wobei die Bestimmungseinheit (206) die Totzeit bestimmt aufgrund einer zeitlichen Position jenes Soll-Werts in der zeitlichen Serie, der eine minimale Abweichung vom erfassten Ist-Wert des Bewegungszustands, insbesondere vom erfassten Ist-Wert des Lenkwinkels und/oder der Beschleunigung, aufweist .

7. Vorrichtung nach einem der Ansprüche 1 bis 6, wobei die Totzeit mittels eines Künstlichen Neuronalen Netzes (300) berechnet wird.

8. Vorrichtung nach einem der Ansprüche 1 bis 7, wobei eine Übertragungsfunktion des Dynamikmodells der Querführung und/oder Längsführung ein PT1-Glied als Faktor umfasst, und wobei die Bestimmungseinheit (206) ferner dazu ausgebildet ist, das PT1-Glied der Übertragungsfunktion aus einer Liste von PT1-Gliedern zu bestimmen, indem der mindestens eine aus dem Dynamikmodell berechnete Soll-Wert mit dem erfassten mindestens einen Ist-Wert verglichen wird.

9. Vorrichtung nach einem der Ansprüche 1 bis 8, wobei eine Übertragungsfunktion des Dynamikmodells der Querführung und/oder Längsführung ein PD1-Glied als Faktor umfasst, und wobei die Bestimmungseinheit (206) und die Regelungseinheit (208) ferner dazu ausgebildet sind, eine Trägheit des Aktors mittels des PD1-Glieds zu bestimmen beziehungsweise zu kompensieren.

10. Vorrichtung nach einem der Ansprüche 1 bis 9, wobei die Querführung und/oder die Längsführung eine Folgeregelung für ein Fahrzeug in einem Fahrzeugverband umfasst.

11. Vorrichtung nach einem der Ansprüche 1 bis 10, wobei die Bestimmungseinheit (206) und/oder die Regelungseinheit (208) dazu ausgebildet ist, Modellparameter des Dynamikmodells während des Fahrbetriebs zu ändern und/oder mindestens eine Schnittstelle zur Änderung von Modellparametern des Dynamikmodells während des Fahrbetriebs umfasst.

12. Vorrichtung nach einem der Ansprüche 1 bis 11, wobei eine Schätzung von Parametern des Dynamikmodells abhängig von einem erkannten Fahrbetriebszustand angepasst wird.

13. Vorrichtung nach einem der Ansprüche 1 bis 12, wobei Modellparameter des Dynamikmodells mit gemessenen und/oder außerhalb des Fahrbetriebs bestimmten Anfangswerten initialisiert sind.

14. Verfahren (100) zur Bestimmung und Kompensation einer Totzeit mindestens eines Aktors zur Querführung und/oder Längsführung eines Kraftfahrzeugs, insbesondere eines Nutzfahrzeugs, umfassend die Schritte:

   - Erfassen (102) mindestens eines Ist-Werts eines Bewegungszustands der Querführung und/oder Längsführung mittels mindestens eines Sensors oder mindestens einer Sensorschnittstelle;
   - Bestimmen (106) einer Totzeit des mindestens einen Aktors durch Vergleich mindestens eines aus einem Dynamikmodell berechneten Soll-Werts des Bewegungszustands mit dem erfassten mindestens einen Ist-Wert; und
   - Regeln (108) der Totzeit des mindestens einen Aktors abhängig vom erfassten Ist-Zustand, wobei eine Regelungseinheit der Querführung und/oder Längsführung um die Totzeit zeitlich vorauslaufende Steuersignale an den Aktor ausgibt.

15. Kraftfahrzeug (500), insbesondere Nutzfahrzeug, umfassend

   mindestens einen Aktor zur Querführung und/oder Längsführung; und
   eine Vorrichtung (200) zur Bestimmung und Kompensation einer Totzeit des mindestens einen Aktors nach einem der Ansprüche 1 bis 13.

**Claims**

1. A device (200) for determining and compensating for a dead time of at least one actuator for the transverse guidance and/or longitudinal guidance of a motor vehicle, in particular a utility vehicle, comprising:

   - at least one sensor (202) or at least one sensor interface for acquiring at least one actual value of a movement state of the transverse guidance and/or longitudinal guidance;
   - a determination unit (206), which is designed to determine the dead time of the at least one actuator by comparing at least one target value of the movement state calculated from a dynamic model of the transverse guidance and/or longitudinal guidance of the motor vehicle to the at least one acquired actual value; and
   - a regulation unit (208), which is designed to regulate the at least one actuator in dependence on the at least one acquired actual value of the movement state and the determined dead time of the at least one actuator, wherein the regulation unit (208) outputs control signals chronologically leading by the dead time to the at least one actuator.

2. The device as claimed in claim 1, furthermore comprising:

   - a storage unit (204), which is designed to store the at least one acquired actual value and output it to the determination unit (206).

3. The device as claimed in claim 1 or 2, wherein the at least one sensor (202) or the at least one sensor interface comprises a receiving module for receiving signals of a global navigation satellite system, preferably including differential correction signals.

4. The device as claimed in any one of claims 1 to 3, wherein the dynamic model comprises a kinematic single-track model and the movement state comprises a steering angle of a wheel and an absolute value of the velocity of the motor vehicle, wherein optionally the determination unit is designed to estimate a value of a virtual wheelbase of the kinematic single-track model and the regulation unit regulates the at least one actuator in dependence on the estimated virtual wheelbase, wherein optionally the determination unit comprises an artificial neural network (300) for estimating the virtual wheelbase, the input space (302) of which comprises a transverse acceleration, a steering wheel angle, a yaw rate, and/or a curvature of the trajectory of the motor vehicle.

5. The device as claimed in any one of claims 1 to 4, wherein the dynamic model comprises skew rigidities at front and rear axle, center of gravity distances of front and rear axle, a mass of the motor vehicle, and/or a moment of inertia around a vertical axis of the motor vehicle as parameters.

6. The device as claimed in any one of claims 1 to 5, wherein the determination unit (206) and/or the regulation unit (208) is furthermore designed to predictively calculate a time series of $N$ future target values of the movement state, in particular target values of the steering angle and/or the acceleration, by means of the dynamic model, wherein $N$ is a natural number, and wherein the determination unit (206) determines the dead time on the basis of a chronological position of that target value in the time series which has a minimal deviation from the acquired actual value of the movement state, in particular from the acquired actual value of the steering angle and/or the acceleration.

7. The device as claimed in any one of claims 1 to 6, wherein the dead time is calculated by means of an artificial neural network (300).

8. The device as claimed in any one of claims 1 to 7, wherein a transfer function of the dynamic model of the transverse guidance and/or longitudinal guidance comprises a PT1 element as a factor, and wherein the determination unit (206) is furthermore designed to determine the PT1 element of the transfer function from a list of PT1 elements in that the at least one target value calculated from the dynamic model is compared to the at least one acquired actual value.

9. The device as claimed in any one of claims 1 to 8, wherein a transfer function of the dynamic model of the transverse guidance and/or longitudinal guidance comprises a PD1 element as a factor, and wherein the determination unit (206) and the regulation unit (208) are furthermore designed to determine and/or compensate for a lag of the actuator by means of the PD1 element.

10. The device as claimed in any one of claims 1 to 9, wherein the transverse guidance and/or the longitudinal guidance comprises a following regulation for a vehicle in a vehicle group.

**11.** The device as claimed in any one of claims 1 to 10, wherein the determination unit (206) and/or the regulation unit (208) is designed to change model parameters of the dynamic model during the driving operation and/or comprises at least one interface for changing model parameters of the dynamic model during the driving operation.

**12.** The device as claimed in any one of claims 1 to 11, wherein an estimation of parameters of the dynamic model is adapted in dependence on a recognized driving operating state.

**13.** The device as claimed in any one of claims 1 to 12, wherein model parameters of the dynamic model are initialized using initial values that are measured and/or determined outside the driving operation.

**14.** A method (100) for determining and compensating for a dead time of at least one actuator for the transverse guidance and/or longitudinal guidance of a motor vehicle, in particular a utility vehicle, comprising the steps:

- acquiring (102) at least one actual value of a movement state of the transverse guidance and/or longitudinal guidance by means of at least one sensor or at least one sensor interface;
- determining (106) a dead time of the at least one actuator by comparing at least one target value of the movement state calculated from a dynamic model to the at least one acquired actual value; and
- regulating (108) the dead time of the at least one actuator in dependence on the acquired actual state, wherein a regulation unit of the transverse guidance and/or longitudinal guidance outputs control signals chronologically leading by the dead time to the actuator.

**15.** A motor vehicle (500), in particular a utility vehicle, comprising
at least one actuator for transverse guidance and/or longitudinal guidance; and a device (200) for determining and compensating for a dead time of the at least one actuator as claimed in any one of claims 1 to 13.

**Revendications**

**1.** Dispositif (200) destiné à déterminer et compenser un temps mort d'au moins un actionneur pour le guidage transversal et/ou le guidage longitudinal d'un véhicule automobile, en particulier d'un véhicule utilitaire, comprenant :

- au moins un capteur (202) ou au moins une interface de capteur destinée à détecter au moins une valeur réelle d'un état de mouvement du guidage transversal et/ou du guidage longitudinal ;
- une unité de détermination (206) qui est conçue pour déterminer le temps mort de l'au moins un actionneur par la comparaison d'au moins une valeur de consigne de l'état de mouvement, calculée à partir d'un modèle dynamique du guidage transversal et/ou du guidage longitudinal du véhicule automobile, avec l'au moins une valeur réelle détectée ; et
- une unité de commande (208) qui est conçue pour commander l'au moins un actionneur en fonction de l'au moins une valeur réelle détectée de l'état de mouvement et du temps mort déterminé de l'au moins un actionneur, dans lequel l'unité de commande (208) délivre à l'au moins un actionneur des signaux de commande qui sont en avance d'un temps égal au temps mort.

**2.** Dispositif selon la revendication 1, comprenant en outre :

- une unité de mémoire (204) qui est conçue pour mémoriser l'au moins une valeur réelle détectée et la délivrer à l'unité de détermination (206).

**3.** Dispositif selon la revendication 1 ou 2, dans lequel l'au moins un capteur (202) ou l'au moins une interface de capteur comprend un module de réception destiné à recevoir des signaux d'un système de navigation global par satellite, incluant de préférence des signaux de correction différentiels.

**4.** Dispositif selon l'une des revendications 1 à 3, dans lequel le modèle dynamique comprend un modèle cinématique à une voie et l'état de mouvement comprend un angle de braquage d'une roue et une valeur de la vitesse du véhicule automobile, dans lequel, en option, l'unité de détermination est conçue pour estimer une valeur d'un empattement virtuel du modèle cinématique à une voie et l'unité de commande effectue la commande de l'au moins un actionneur en fonction de l'empattement virtuel estimé, dans lequel, en option, l'unité de détermination comprend un réseau neuronal artificiel (300) destiné à estimer l'empattement virtuel, dont l'espace d'entrée (302) comprend une accélération transversale, un angle de volant de direction, un taux de lacet et/ou une courbure de la trajectoire du véhicule automobile.

5. Dispositif selon l'une des revendications 1 à 4, dans lequel le modèle dynamique comprend en tant que paramètres des rigidités de désalignement sur les essieux avant et arrière, des distances entre centres de gravité des essieux avant et arrière, une masse du véhicule automobile et/ou un moment d'inertie autour d'un axe vertical du véhicule automobile.

6. Dispositif selon l'une des revendications 1 à 5, dans lequel l'unité de détermination (206) et/ou l'unité de commande (208) est en outre conçue pour précalculer une série temporelle de N valeurs de consigne futures de l'état de mouvement, en particulier des valeurs de consigne de l'angle de braquage et/ou de l'accélération, au moyen du modèle dynamique, où N est un nombre naturel, et dans lequel l'unité de détermination (206) détermine le temps mort sur la base d'une position temporelle de la valeur de consigne, dans la série temporelle, qui présente un écart minimal par rapport à la valeur réelle détectée de l'état de mouvement, en particulier par rapport à la valeur réelle détectée de l'angle de braquage et/ou de l'accélération.

7. Dispositif selon l'une des revendications 1 à 6, dans lequel le temps mort est calculé au moyen d'un réseau neuronal artificiel (300).

8. Dispositif selon l'une des revendications 1 à 7, dans lequel une fonction de transfert du modèle dynamique du guidage transversal et/ou du guidage longitudinal comprend en tant que facteur un élément PT1, et dans lequel l'unité de détermination (206) est en outre conçue pour déterminer l'élément PT1 de la fonction de transfert à partir d'une liste d'éléments PT1 en comparant l'au moins une valeur de consigne calculée à partir du modèle dynamique avec l'au moins une valeur réelle détectée.

9. Dispositif selon l'une des revendications 1 à 8, dans lequel une fonction de transfert du modèle dynamique du guidage transversal et/ou du guidage longitudinal comprend en tant que facteur un élément PD1, et dans lequel l'unité de détermination (206) et l'unité de commande (208) sont en outre conçues pour déterminer et compenser respectivement une inertie de l'actionneur au moyen de l'élément PD1.

10. Dispositif selon l'une des revendications 1 à 9, dans lequel le guidage transversal et/ou le guidage longitudinal comprend une commande de suivi pour un véhicule au sein d'un ensemble de véhicules.

11. Dispositif selon l'une des revendications 1 à 10, dans lequel l'unité de détermination (206) et/ou l'unité de commande (208) est conçue pour modifier des paramètres de modèle du modèle dynamique pendant le mode de conduite et/ou comprend au moins une interface destinée à modifier des paramètres de modèle du modèle dynamique pendant le mode de conduite.

12. Dispositif selon l'une des revendications 1 à 11, dans lequel une estimation de paramètres du modèle dynamique est adaptée en fonction d'un état de conduite détecté.

13. Dispositif selon l'une des revendications 1 à 12, dans lequel des paramètres de modèle du modèle dynamique sont initialisés avec des valeurs initiales mesurées et/ou déterminées en dehors du mode de conduite.

14. Procédé (100) destiné à déterminer et compenser un temps mort d'au moins un actionneur pour le guidage transversal et/ou le guidage longitudinal d'un véhicule automobile, en particulier d'un véhicule utilitaire, comprenant les étapes consistant à :

   - détecter (102) au moins une valeur réelle d'un état de mouvement du guidage transversal et/ou du guidage longitudinal au moyen d'au moins un capteur ou d'au moins une interface de capteur ;
   - déterminer (106) un temps mort de l'au moins un actionneur par la comparaison d'au moins une valeur de consigne de l'état de mouvement, calculée à partir d'un modèle dynamique, avec l'au moins une valeur réelle détectée ; et
   - commander (108) le temps mort de l'au moins un actionneur en fonction de l'état réel détecté, dans lequel une unité de commande du guidage transversal et/ou du guidage longitudinal délivre à l'actionneur des signaux de commande qui sont en avance d'un temps égal au temps mort.

**15.** Véhicule automobile (500), en particulier véhicule utilitaire, comprenant

au moins un actionneur destiné au guidage transversal et/ou au guidage longitudinal ; et
un dispositif (200) destiné à déterminer et compenser un temps mort de l'au moins un actionneur selon l'une des revendications 1 à 13.

## FIG. 1

100

Erfassen mindestens eines Ist-Werts eines Bewegungszustands der Quer- / Längsführung mittels eines Sensors / einer Sensorschnittstelle ⁓ 102

Speichern des Ist-Werts ⁓ 104

Bestimmen einer Totzeit mindestens eines Aktors durch Vergleich mindestens eines aus einem Dynamikmodell berechneten Soll-Werts des Bewegungszustands mit dem erfassten Ist-Wert ⁓ 106

Regeln der Totzeit des Aktors abhängig vom erfassten Ist-Zustand, wobei eine Regelungseinheit der Quer- / Längsführung um die Totzeit zeitlich vorauslaufende Steuersignale an den Aktor ausgibt ⁓ 108

## FIG. 2

200

Sensor / Sensorschnittstelle ⁓ 202

Speichereinheit ⁓ 204

Bestimmungseinheit ⁓ 206

Regelungseinheit ⁓ 208

EP 4 038 463 B1

FIG. 3

300

FIG. 4

400

404

$\Delta y_{lat}$ in m

0.5

0

−0.5

τ_δ = 0 s
τ_δ = 0.30 s
τ_δ = 0.35 s
τ_δ^{ins} = 0.42 s

0    2    4    6    8    10    12    14    16    18    20    22    24    26

Zeit in s

402

406

408

EP 4 038 463 B1

FIG. 5

500

EP 4 038 463 B1

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014215243 A1
- EP 3373095 A1